# EUROPÄISCHE PATENTSCHRIFT

(11) **EP 3 093 227 B1**
(45) Veröffentlichungstag und Bekanntmachung des Hinweises auf die Patenterteilung: **03.06.2020**
(21) Anmeldenummer: 16000638.3
(22) Anmeldetag: 16.03.2016
(51) Int. Cl.: B62M 9/10

(54) **FAHRRAD-HINTERRAD-RITZELANORDNUNG**
BICYCLE REAR WHEEL PINION ASSEMBLY
PIGNON DE ROUE ARRIÈRE DE BICYCLETTE

(30) Priorität: 30.03.2015 DE 102015205736
(43) Veröffentlichungstag der Anmeldung: 16.11.2016
(73) Patentinhaber: SRAM Deutschland GmbH, 97424 Schweinfurt (DE)
(72) Erfinder: Braedt, Henrik, 97456 Dittelbrunn/OT Hambach (DE); Reinbold, Matthias, 97070 Würzburg (DE)

(56) Entgegenhaltungen:
- EP-A2- 2 022 712
- DE-A1- 19 629 602
- US-A- 5 954 604

## Beschreibung

Die vorliegende Erfindung betrifft eine Fahrrad-Hinterrad-Ritzelanordnung, welche um eine Ritzeldrehachse drehbar ist, umfassend eine Mehrzahl von bezüglich der Ritzeldrehachse koaxialen, mit axialem Abstand voneinander angeordneten Ritzeln unterschiedlicher Zähneanzahlen, welche zum formschlüssigen Eingriff mit einer Fahrradkette ausgebildet sind, wobei die Ritzelanordnung einen Gangbereich-Quotienten aufweist, welcher gebildet ist durch Division der Zähneanzahl des durchmessergrößten Ritzels durch die Zähneanzahl des durchmesserkleinsten Ritzels, und einen Packungsdichte-Quotienten aufweist, welcher gebildet ist durch Division der Anzahl an Ritzeln in der Ritzelanordnung durch den axialen Abstand, gemessen in Millimeter, der axial äußersten Ritzel voneinander.

Derartige Fahrrad-Hinterrad-Ritzelanordnungen sind als Fahrradkomponenten allgemein bekannt. Sie kommen sowohl im Tourenrad-, Rennrad- wie auch im Mountainbike-Bereich immer dort zum Einsatz, wo Kettenschaltungen an Fahrrädern vorgesehen sind, um unterschiedliche Übertragungsverhältnisse von der Tretkurbel zum Hinterrad zu realisieren. Die Anzahl an Ritzeln am Hinterrad hat dabei im Verlauf der Zeit stets zugenommen, um Übertragungsverhältnisse immer feiner abzustufen. Diese Feinheit der Abstufung wurde noch weiter durch eine zunehmende Anzahl von Kettenblättern an der Tretkurbel unterstützt.

In jüngster Zeit ist eine Entwicklungstendenz bemerkbar, die die Anzahl an unmittelbar mit der Tretkurbel gekoppelten Kettenblättern wieder reduziert. Dies kann bis zu sogenannten 1-fach-Kettenschaltungen führen, bei welchen an der Tretkurbel nur noch ein einziges Kettenblatt vorgesehen ist. Mit der Abnahme der Anzahl an Kettenblättern kommt es für die Realisierung von gewünschten Übertragungsverhältnissen in immer stärkerem Maße auf die Anzahl an Ritzeln in der Hinterrad-Ritzelanordnung und auf deren Zähneanzahl-Abstufung an.

Als Beispiel einer Fahrrad-Hinterrad-Ritzelanordnung für eine 1-fach-Kettenschaltung sei auf die Druckschrift US 3,748,916 A von Morse verwiesen. Diese Druckschrift offenbart eine Fahrrad-Hinterrad-Ritzelanordnung mit insgesamt fünf Ritzeln, von denen das kleinste 9 und das größte 45 Zähne aufweisen kann. Diese Ritzelanordnung weist somit einen Gangbereich-Quotienten von 45 : 9 = 5 auf. Der Gangbereich-Quotient ist somit ein Maß für die Bandbreite an Übertragungsverhältnissen, die mit einer Ritzelanordnung realisierbar sind. Je größer der Wert des Gangbereich-Quotienten ist, desto größer ist die Bandbreite realisierbarer Übertragungsverhältnisse.

Der technisch fortschrittlichste Stand der Technik im Bereich der 1-fach-Kettenschaltungen dürfte derzeit ein unter der Bezeichnung "XX1" von SRAM am Markt angebotenes System sein. Dieses System mit einer 11 Ritzel umfassenden Hinterrad-Ritzelanordnung weist einen Gangbereich-Quotienten von 4,2 auf.

Dokument DE 196 29 602 A1 zeigt eine gattungsgemässe Fahrrad-Hinterrad-Ritzelanordnung.

Als weiterer Stand der Technik wird verwiesen auf die EP 2 022 712 A von Campagnolo, die eine 12-fach-Ritzelanordnung offenbart, deren kleinstes Ritzel 11 und deren größtes Ritzel 27 Zähne aufweist. Der Gangbereich-Quotient dieser Ritzelanordnung ist mit 2,45 etwas weniger als halb so groß wie jener der Ritzelanordnung des zuvor diskutierten US-Patents.

Als weiteres Extrembeispiel einer Mehrfach-Ritzelanordnung sei auf die US 5,954,604 A von Shimano verwiesen, die eine Ritzelanordnung mit 14 Ritzeln zeigt. Die Figur 13 dieser Druckschrift zeigt ein Ausführungsbeispiel, bei welchem das kleinste Ritzel der Ritzelanordnung 11 Zähne und das größte Ritzel 39 Zähne aufweist. Der Gangbereich-Quotient dieser bekannten Ritzelanordnung beträgt also 3,54.

Ein Maß für die Feinheit der Abstufung der mit einer Hinterrad-Ritzelanordnung erzielbaren Übertragungsverhältnisse gibt nachvollziehbarerweise die Anzahl an Ritzeln in der Ritzelanordnung an. Je höher die Anzahl an Ritzeln, desto feiner kann die Abstufung der einstellbaren Übertragungsverhältnisse sein.

Allerdings steht für die Anordnung der Hinterrad-Ritzelanordnung an einer Hinterradnabe nur begrenzt Bauraum zur Verfügung, sodass die Anzahl an Ritzeln in der Ritzelanordnung nicht beliebig erhöht werden kann. Der eingangs genannte Packungsdichte-Quotient gibt daher unmittelbar ein Maß darüber an, wie effektiv der an der Hinterradnabe vorhandene Bauraum für die Anordnung von Ritzeln genutzt ist. Mittelbar ist der Packungsdichte-Quotient auch ein Maß über die Feinheit der Abstufung der erzielbaren Übertragungsverhältnisse, da er im Zähler Information über die Anzahl an Ritzel in der Hinterrad-Ritzelanordnung enthält. Wiederum gilt: je höher der Packungsdichte-Quotient, desto effektiver ist die Bauraumausnutzung für die Anordnung von Ritzeln. Der Packungsdichte-Quotient ist wie der Gangbereich-Quotient ein dimensionsloser Zahlenwert, zu dessen Ermittlung lediglich der Zahlenwert des in Millimetern gemessenen Abstands zwischen den axial jeweils ganz außen liegenden Ritzeln herangezogen werden soll.

Die aus der US 3,748,916 A bekannte 5-fach-Ritzelanordnung nimmt beispielsweise einen axialen Bauraum von etwa 26 mm ein. Der Packungsdichte-Quotient als reine Zahlenwertgröße dieser Ritzelanordnung beträgt somit 0,192.

Im Vergleich dazu ist in der EP 2 022 712 A für das 12-fach-Ritzel im vorteilhaftesten offenbarten Fall, dessen Verwirklichung jedoch in der Druckschrift nicht nachgewiesen ist, eine axiale Bauraumforderung von 40,5 mm genannt. Dies führt zu einem Packungsdichte-Quotienten von 0,296.

Das oben genannte 1-fach-Kettenschaltungssystem "XX1" der Anmelderin hat mit 11 Ritzeln in einem Bauraum von 38,4 mm einen Packungsdichte-Quotienten von 0,286.

Schließlich sei als weiterer Vergleich auf die oben genannte US 5,954,604 A verwiesen, bei der 14 Ritzel einer Ritzelanordnung mit einem axialen Abstand der äußersten Ritzel aufgenommen sind, der axial etwa 50 mm misst, was zu einem Packungsdichte-Quotienten von etwa 0,28 führt.

Offensichtlich weisen moderne Hinterrad-Ritzelanordnungen einen Packungsdichte-Quotienten knapp unterhalb von 0,3 auf. Dies zeigt den derzeitigen Stand der axialen Bauraumausnutzung an Hinterradnaben.

Bei der Bestimmung des Packungsdichte-Quotienten kommt es auf die Art und Weise an, wie der axiale Abstand der axial äußersten Ritzel voneinander, also in der Regel des durchmessergrößten und des durchmesserkleinsten Ritzels voneinander, ermittelt wird. Grundsätzlich ist es möglich, die zur Ritzeldrehachse orthogonalen Ritzel-Mittelebenen als Bezugsebenen für eine Abstandsermittlung heranzuziehen.

Da sich für die Realisierung von Schaltvorgängen an der Hinterrad-Ritzelanordnung die Positionierung der Schaltwerke relativ zu den Hinterrad-Ritzeln jedoch an den im montierten Zustand von der Fahrrad-Längsmittelebene wegweisenden Frontflächen der einzelnen Ritzel orientiert, werden bevorzugt die axialen Frontflächen der einzelnen Ritzel als Bezugsflächen für die Abstandsermittlung herangezogen. Dabei ist am durchmessergrößten Ritzel die Frontfläche auf derjenigen Seite heranzuziehen, der das nächst kleinere Ritzel gegenüberliegt. Am durchmesserkleinsten Ritzel ist jene Frontfläche heranzuziehen, welche vom durchmessergrößten Ritzel wegweist. Ist ein Ritzel aus Gründen möglichst effektiver Ausnutzung des zu seiner Anbringung vorgesehenen Bauraums an der Hinterradnabe mit einer Kröpfung versehen, soll der dem Zahnkranz des jeweiligen Ritzels nächstgelegene Frontflächenabschnitt maßgeblich sein. Der Abstand der axial äußersten Ritzel voneinander ist daher bevorzugt der axiale Abstand der jeweiligen Frontflächen dieser Ritzel voneinander.

Im Zweifel ist als Frontfläche jene Fläche bzw. jener Flächenabschnitt eines Ritzels zu bestimmen, mit welchem das Ritzel auf der betreffenden Seite auf einem ebenen Untergrund aufliegt. Weist das Ritzel einzelne Zähne auf, die - etwa als Schaltunterstützungszähne - über die Frontfläche axial vorragen, sind diese Zähne bei der Bestimmung der Frontfläche außer Betracht zu lassen. Derartige über die Frontfläche axial vorstehende "Ausnahmezähne" sind beispielsweise aus der EP 1 671 880 A bekannt.

Der oben dargelegte Überblick über unterschiedliche bestehende Hinterrad-Ritzelanordnungen zeigt, dass bestehende Ritzelanordnungen entweder eine große Bandbreite von Übertragungsverhältnissen bieten, dann sind diese jedoch relativ grob abgestuft und auf verhältnismäßig großem axialen Bauraum verteilt, oder bestehende Ritzelanordnungen bieten eine sehr feine Abstufung von verhältnismäßig engen Bandbreiten von Übertragungsverhältnissen, dann jedoch unter sehr effektiver Ausnutzung des zur Verfügung stehenden axialen Bauraums.

Die bestehenden Ritzelanordnungen für Fahrrad-Hinterräder werden den wachsenden Anforderungen an sie nicht mehr in jedem Fall gerecht. Angesichts der eingangs geschilderten neuesten technischen Tendenzen in der Entwicklung von Fahrradkomponenten reicht es nicht mehr aus, Bandbreite an Übertragungsverhältnissen nur noch sehr grob abzustufen oder nur eine geringe Bandbreite an Übertragungsverhältnissen zu bieten. Insbesondere, aber nicht nur, für den Fall einer 1-fach-Kettenschaltung mit nur einem Kettenblatt wird am Hinterrad eine große Bandbreite an Übertragungsverhältnissen benötigt, die verhältnismäßig fein abgestuft ist und an üblichen Fahrradkonstruktionen Platz findet. Hierfür wird eine neue Klasse an Fahrrad-Hinterrad-Ritzelanordnungen benötigt.

Die vorliegende Erfindung erfüllt diese Anforderungen an moderne Fahrrad-Hinterrad-Ritzelanordnungen durch Bereitstellung einer Fahrrad-Hinterrad-Ritzelanordnung der eingangs genannten Art, welche erfindungsgemäß einen Gangbereich-Packungskoeffizienten aufweist, welcher größer ist als 1,25.

Der Gangbereich-Packungskoeffizient ist dabei das Produkt aus den oben bereits diskutierten Gangbereich- und Packungsdichte-Quotienten. Der Gangbereich-Packungskoeffizient ist ein Maß dafür, welche Bandbreite an Übertragungsverhältnissen mit welcher Abstufung bei welcher Ausnutzung des axialen Bauraums an der Hinterradnabe bereitgestellt wird. Je höher der Gangbereich-Packungskoeffizient ist, desto größer ist die Bandbreite an Übertragungsverhältnissen, desto feiner ist auch die Abstufung dieser Bandbreite und desto weniger axialer Bauraum wird für die Realisierung der jeweiligen Ritzelanordnung benötigt.

Zum Vergleich: Der Gangbereich-Packungskoeffizient der aus der US 3,748,916 A bekannten Ritzelanordnung beträgt etwa 0,96. Der Gangbereich-Packungskoeffizient der aus der EP 2 022 712 A bekannten 12-fach-Ritzelanordnung beträgt etwa 0,72. Der Gangbereich-Packungskoeffizient der aus der US 5,954,604 A bekannten Hinterrad-Ritzelanordnung mit 14 Ritzeln beträgt etwa 0,991.

Der Gangbereich-Packungskoeffizient des "XX1"-Systems beträgt 1,20.

Mit der neuen Klasse an Hinterrad-Ritzelanordnungen, bei welchen der Gangbereich-Packungskoeffizient größer als 1,25 ist, lassen sich an Hinterrad-Ritzelanordnungen große Bandbreiten an Übertragungsverhältnissen mit zahlreichen Ritzeln auf engem axialem Bauraum verhältnismäßig fein abgestuft bereitstellen. Bevorzugt ist daher der Gangbereich-Packungskoeffizient einer erfindungsgemäßen Ritzelanordnung sogar größer als 1,3, besonders bevorzugt sogar größer als 1,35. Es ist leicht einzusehen, dass mit zunehmenden Werten des hier diskutierten Koeffizienten der von den betroffenen Ritzelanordnungen bereitgestellte Fahrkomfort hinsichtlich Übertragungsverhältnis-Bandbreite und Abstufung ebenfalls zunimmt, sodass in Übereinstimmung mit vom Anmelder durchgeführten Versuchen Ritzelanordnungen mit einem Gangbereich-Packungskoeffizienten von größer als 1,4 in besonderem Maße bevorzugt sind. Wie nachfolgend anhand des Ausführungsbeispiels gezeigt ist, ist ein Gangbereich-Packungskoeffizient von 1,48 derzeit bevorzugt.

Mit den erfindungsgemäßen Hinterrad-Ritzelanordnungen mit Gangbereich-Packungskoeffizienten von größer als 1,25 ist überdies die Voraussetzung geschaffen, die beim Betrieb eines mit der Hinterrad-Ritzelanordnung ausgestatteten Fahrrads auftretenden Kettenlasten, also genauer Ketten-Zuglasten, zu verringern. Mit der Verringerung der Ketten-Zuglasten sind vorteilhafte Wirkungen verbunden, wie eine Reduktion der innerhalb der Fahrradkette oder auch zwischen der Fahrradkette und einem Eingriffselement (Ritzel, Kettenblatt) wirkenden Reibung und dem an der Fahrradkette und einem Eingriffselement auftretenden Verschleiß. Außerdem bewirkt eine Reduzierung der maximalen Ketten-Zuglast eine Verringerung der Verformung des Fahrradrahmens im Betrieb durch sich periodisch mit dem Treten der Tretkurbel ändernde Ketten-Zuglasten. Hinterrad-Ritzelanordnungen mit Gangbereich-Packungskoeffizienten von größer als 1,25 werden nämlich vorrangig durch die Verwendung von durchmessergrößten Ritzeln mit sehr hohen Zähneanzahlen erreicht, sodass der Lastarm dieser durchmessergrößten Ritzel größer ist als der Lastarm vergleichbarer Ritzel bestehnder und bekannter Ritzelanordnungen. Bei gleichem in das hintere Laufrad eingeleiteten Drehmoment wird für den größeren Lastarm eine kleinere Kraft, also eine kleinere Kettenlast, benötigt.

Hinterradritzel mit größerem Durchmesser gestatten die Verwendung von Kettenblättern mit größerem Durchmesser, ohne dass sich dabei das Übertragungsverhältnis von den Tretkurbeln zum Hinterrad verschlechtert. Im Gegenteil: durch unterproportionale Vergrößerung des Durchmessers auch des Kettenblattes - verglichen etwa mit bestehenden 1-fach-Kettenschaltungssystemen - im Verhältnis zur Vergrößerung des Durchmessers des durchmessergrößten Ritzels kann nicht nur die im Betrieb auftretende Kettenlast verringert, sondern gleichzeitig die Bandbreite der Drehmomentübertragung von den Tretkurbeln zum Hinterrad vergrößert werden.

Mit zunehmenden Werten der Gangbereich-Packungskoeffizienten können konstruktive Probleme an den jeweiligen Ritzelanordnungen zu lösen sein, auf die weiter unten eingegangen werden wird. Beispielsweise kann das durchmessergrößte Ritzel Durchmesser annehmen, bei welchen die durch die Fahrradkette auf das Ritzel ausgeübte Last zu einer beachtenswerten Biegebelastung des Ritzels führt. Dies gilt umso mehr, als die auf dem durchmessergrößten Ritzel laufende Fahrradkette eine gewisse Schrägstellung relativ zur Fahrrad-Längsmittenebene aufweisen kann, da es sich bei dem durchmessergrößten Ritzel um ein axial äußerstes Ritzel der erfindungsgemäßen Ritzelanordnung handelt.

Ebenso kann am durchmesserkleinsten Ritzel - wiederum aufgrund der Schrägstellung der auf dem durchmesserkleinsten Ritzel laufenden Fahrradkette - eine Annäherung der Fahrradkette an das nächst größere Ritzel bis hin zum Schleifkontakt der Kette mit diesem Ritzel zu besorgen sein. Derartige Probleme können, müssen jedoch nicht auftreten.

Um eine möglichst ausreichende Bandbreite an Übertragungsverhältnissen an der Fahrrad-Hinterrad-Ritzelanordnung bereitzustellen, ist es vorteilhaft, wenn der Gangbereich-Quotient der Ritzelanordnung größer oder gleich 4,2 ist. Je größer der Gangbereich-Quotient ist, desto größer ist der von der Ritzelanordnung bereitgestellte Bereich an Übertragungsverhältnissen. Deshalb ist der Gangbereich-Quotient bevorzugt größer oder gleich 4,5.

Um aus der Konstruktion der Ritzelanordnung resultierende Schwierigkeiten im Betrieb zu vermeiden - wie etwa die oben genannten -, ist es vorteilhaft, wenn der Gangbereich-Quotient den Wert 6 nicht übersteigt. Mit noch größerer Wahrscheinlichkeit können Schwierigkeiten im Betrieb der Ritzelanordnung vermieden werden, wenn der Gangbereich-Quotient nicht größer ist als 5,5.

Eine möglichst gute Ausnutzung des zur Aufnahme der Ritzel der Ritzelanordnung vorhandenen Bauraums kann dann erreicht werden, wenn der Packungsdichte-Quotient der Ritzelanordnung einen Wert von größer oder gleich 0,286 aufweist. Bevorzugt ist dieser aus den genannten Gründen größer oder gleich 0,290.

Auch im Zusammenhang mit der durch den Packungsdichte-Quotienten beschriebenen Konstruktion der Ritzelanordnung können bei zu hohen Werten des Packungsdichte-Quotienten Schwierigkeiten im Betrieb der Ritzelanordnung auftreten, wie beispielsweise ein unerwünschter Kontakt der mit einem Ritzel kämmenden Fahrradkette mit einem benachbarten Ritzel, etwa weil diese axial zu stark angenähert sind. Um derartige Schwierigkeiten im Betrieb zu vermeiden, sollte der Packungsdichte-Quotient vorteilhafterweise nicht größer als 0,36 sein, wobei die Wahrscheinlichkeit, Betriebsschwierigkeiten zu vermeiden, mit einem 0,33 nicht übersteigenden Packungsdichte-Quotienten noch größer ist.

Um zur Überwindung von Steigungen eine möglichst vorteilhafte Drehmomentübertragung von der Tretkurbel zum hinteren Laufrad bereitstellen zu können, sollte - unter Berücksichtigung einer gewissen erforderlichen Mindestgröße des vorderen Kettenblatts - das durchmessergrößte Ritzel der Ritzelanordnung nicht weniger als 45 Zähne aufweisen. Größere Steigungen können mit einem durchmessergrößten Ritzel mit nicht weniger als 48 Zähnen bewältigt werden. Im Bereich von Mountainbikes kann ein durchmessergrößtes Ritzel mit nicht weniger als 50 Zähnen vorteilhaft sein, um die vom Radfahrer angetroffenen Herausforderungen zu meistern.

Was an dem dem durchmessergrößten Ritzel näheren axialen Längsende der Ritzelanordnung der Anwendungsfall der Bergfahrt ist, ist am entgegengesetzten axialen Längsende, an dem sich das durchmesserkleinste Ritzel befindet, der Anwendungsfall der Schnellfahrt. Um hier ausreichende Übertragungsverhältnisse im Zusammenwirken mit dem wenigstens einen Kettenblatt an der Tretkurbel bereitstellen zu können, ist vorteilhafterweise vorgesehen, dass das durchmesserkleinste Ritzel nicht mehr als 12 Zähne aufweist. Höhere Fahrgeschwindigkeiten aufgrund einer noch höheren Übertragung der Muskelkraft ins Schnelle kann durch ein durchmesserkleinstes Ritzel mit nicht mehr als 11 Zähnen erreicht werden. Höchstbevorzugt weist das durchmesserkleinste Ritzel nicht mehr als 10 Zähne auf, um selbst außergewöhnlich hohe Spitzengeschwindigkeiten erreichen zu können.

Neben der Bandbreite an Übertragungsverhältnissen ist die Abstufung der insgesamt durch die Hinterrad-Ritzelanordnung bereitgestellten Bandbreite von Interesse. Angesichts der oben beschriebenen großen Bandbreite - ausgedrückt durch den Gangbereich-Quotienten - sollte die vorliegend diskutierte Hinterrad-Ritzelanordnung ausgehend von einem axial äußersten Ritzel wenigstens 8 weitere Stufen bieten, sodass die erfindungsgemäße Hinterrad-Ritzelanordnung bevorzugt mehr als 8 Ritzel aufweist. Mit zunehmender Anzahl an Ritzeln steigt auch die Feinheit der Abstufung, sodass die vorliegend diskutierte Hinterrad-Ritzelanordnung gemäß einer vorteilhaften Weiterbildung der vorliegenden Erfindung mehr als 10 Ritzel aufweist, besonders bevorzugt sogar mehr als 11 Ritzel aufweist.

Gemäß einer vorteilhaften Weiterbildung der vorliegenden Erfindung übersteigt die prozentuale Änderung der Zähneanzahl von einem Ritzel auf das nächst größere Ritzel der erfindungsgemäßen Hinterrad-Ritzelanordnung - stets bezogen auf das kleinere der beiden betrachteten Ritzel - 20 % nicht. Dabei ist es vorteilhaft, wenn die beiden größten prozentualen Änderungen in der Zähneanzahl im Übergang vom durchmesserkleinsten auf das nächst größere Ritzel und im Übergang vom zweitgrößten auf das durchmessergrößte Ritzel realisiert sind. Vorteilhafterweise tritt der größte prozentuale Sprung in der Zähneanzahl im Übergang vom durchmesserkleinsten Ritzel auf das nächst größere Ritzel auf. Dann kann die zweitgrößte prozentuale Änderung der Zähneanzahl im Übergang vom zweitgrößten Ritzel auf das durchmessergrößte Ritzel vorliegen. Um im Ritzelbereich zwischen dem durchmesserkleinsten und dem durchmessergrößten Ritzel eine möglichst gleichmäßige Abstufung der erzielbaren Übertragungsverhältnisse zu erreichen, kann es weiter vorteilhaft sein, wenn die prozentualen Änderungen in der Zähneanzahl zwischen zwei benachbarten Ritzeln dieser Ritzelgruppe nicht unter 12 % und nicht über 17 % betragen. Der Wert der prozentualen Änderung der Zähneanzahl von einem Ritzel zum nächst größeren kann vom durchmesserkleinsten zum durchmessergrößten Ritzel wiederholt zunächst ab- und dann wieder zunehmen.

Bei den oben diskutierten Randbedingungen für das durchmessergrößte Ritzel kann dieses eine verhältnismäßig große Masse und damit verbunden ein verhältnismäßig großes Gewicht erreichen. Da die Ritzel Teil der zu beschleunigenden und zu verzögernden Fahrradmasse sind, ist jedoch ein durchmessergrößtes Ritzel mit möglichst geringer Masse erwünscht. Um sicherzustellen, dass die an der Tretkurbel vom Fahrradfahrer eingeleitete Muskelkraft sicher und dauerhaft an das hintere Laufrad übertragen werden kann, weist das durchmessergrößte Ritzel bevorzugt radial außen einen Zahnkranzbereich zur Übertragung von Kraft von der Fahrradkette auf das Ritzel auf. Ebenso weist das durchmessergrößte Ritzel vorzugsweise radial innen einen Nabenbereich auf, welcher der Übertragung von Drehmoment vom Ritzel auf eine Hinterradnabe dient, an der die Hinterrad-Ritzelanordnung aufgenommen ist. Zur Reduzierung der bewegten Masse ist es dann vorteilhaft, wenn radial zwischen dem Zahnkranzbereich und dem Nabenbereich zur Drehmoment übertragenden Verbindung dieser Bereiche eine Mehrzahl von Ritzel-Speichen vorgesehen ist.

Das durchmessergrößte Ritzel kann bei möglichst geringer Masse dann in vorteilhafter Weise mit für den Betrieb ausreichender Formstabilität bereitgestellt werden, wenn das durchmessergrößte Ritzel einen radial weiter außen liegenden äußeren Speichenbereich aufweist und einen radial weiter innen liegenden inneren Speichenbereich aufweist, wobei der äußere Speichenbereich eine größere Anzahl an Ritzel-Speichen aufweist als der innere Speichenbereich. In diesem Fall können beispielsweise die Ritzel-Speichen im inneren Speichenbereich in etwa mit der gleichen Querschnittsfläche ausgebildet sein wie die Ritzel-Speichen im äußeren Speichenbereich.

Zur Abstützung der unterschiedlichen Anzahl an Ritzel-Speichen im äußeren und im inneren Speichenbereich kann in vorteilhafter Weiterbildung der vorliegenden Erfindung zwischen dem äußeren und dem inneren Speichenbereich ein in Umfangsrichtung massiver Zwischenringbereich ausgebildet sein. An diesem massiven Zwischenringbereich können sich die radial äußeren Enden der Ritzel-Speichen des inneren Speichenbereichs und die radial inneren Enden der Ritzel-Speichen des äußeren Speichenbereichs abstützen.

Vorteilhafterweise ist auch der zuvor genannte Zahnkranzbereich massiv ausgebildet, d. h. ohne Material aussparende Unterbrechungen an oder/und zwischen den Zähnen des Zahnkranzbereichs, um in Umfangsrichtung möglichst gleichmäßige Bedingungen für die Drehmomentübertragung von der Fahrradkette an die Ritzelanordnung bereitzustellen. Aus den gleichen Gründen einer möglichst gleichmäßigen Drehmomentübertragung von der Ritzelanordnung auf eine Hinterradnabe ist auch der oben genannte Nabenbereich vorzugsweise massiv ausgebildet.

Um zwischen den für den Schaltvorgang an der Hinterrad-Ritzelanordnung maßgeblichen Zahnkranzbereichen der axial äußersten Ritzel einen größeren axialen Abstand vorsehen zu können als an der Hinterradnabe selbst für die Anbringung der Ritzel bereitsteht, kann wenigstens das durchmessergrößte Ritzel mit einer Kröpfung ausgebildet sein. Hierzu ist das durchmessergrößte Ritzel bevorzugt derart gekröpft, dass sein Zahnkranz von dem durchmesserkleinsten Ritzel einen größeren axialen Abstand aufweist als ein radial weiter innen gelegener abgekröpfter Ritzelbereich des durchmessergrößten Ritzels. Aus Stabilitätsgründen ist dann diese Kröpfung bevorzugt im Radialabschnitt des massiven Zwischenringbereichs ausgebildet. Wenigstens kann die Kröpfung mit dem Zwischenringbereich in radialer Richtung überlappen. Bevorzugt liegt die Kröpfung jedoch vollständig in dem Zwischenringbereich.

Überdies kann durch eine derartige Kröpfung die Biegestabilität des durchmessergrößten Ritzels bezüglich einer Biegung um eine zur Drehachse des Ritzels orthogonale Biegeachse erhöht werden.

Vorzugsweise ist der massive Zwischenringbereich wenigsten in einem Radialabschnitt kreisförmig ausgebildet, d. h. es existiert ein massiver Radialabschnitt des Zwischenringbereichs, der von der Ritzeldrehachse an jedem Punkt in Umfangsrichtung den gleichen radialen Abstand aufweist.

Zur Aussteifung des durchmessergrößten Ritzels kann weiter vorgesehen sein, dass im äußeren Speichenbereich wenigstens in einem Umfangsabschnitt, vorzugsweise längs des gesamten Umfangs, jede zweite Ritzel-Speiche als Verbindungsspeiche mit ihrer in einem vorgegebenen Umlaufsinn unmittelbar benachbarten Ritzel-Speiche durch eine radial zwischen den Längsenden der Ritzel-Speichen gelegene Verbindungsstrebe verbunden ist. Somit können jeweils Paare von Ritzel-Speichen durch die Verbindungsstrebe miteinander verbunden sein. Diese Verbindungsstrebe kann in vorteilhafter Weiterbildung der vorliegenden Erfindung dazu genutzt werden, das durchmessergrößte Ritzel mit dem axial unmittelbar benachbarten nächst kleineren Ritzel zu verbinden. Deshalb kann bevorzugt vorgesehen sein, die wenigstens eine Verbindungsstrebe radial in einem Bereich anzuordnen, der von dem axial benachbarten nächst kleineren Ritzel radial überragt wird, um an dem axial unmittelbar benachbarten nächst kleineren Ritzel ausreichend Material zur Herstellung einer körperlichen Verbindung mit der Verbindungsstrebe am durchmessergrößten Ritzel bereitzustellen, ohne durch die körperliche Verbindung den Eingriff der Fahrradkette mit diesem Ritzel zu stören.

Es hat sich dabei überraschend gezeigt, dass es sowohl für die vorteilhafte zusätzliche Aussteifung des durchmessergrößten Ritzels wie auch für eine ausreichende körperliche Verbindung des durchmessergrößten Ritzels mit dem axial benachbarten nächst kleineren Ritzel ausreicht, wenn nur jede zweite Ritzel-Speiche in der oben genannten Weise als Verbindungsspeiche ausgebildet ist. Zur Erzielung eines möglichst geringen Gesamtgewichts des durchmessergrößten Ritzels ist es daher bevorzugt, dass zwischen der Verbindungsspeiche und ihrer in dem dem vorgegebenen Umlaufsinn entgegengesetzten Umlaufsinn benachbarten Ritzel-Speiche eine derartige Verbindungsstrebe nicht vorgesehen ist.

Vorzugsweise ist eine Mehrzahl von Verbindungsstreben, vorzugsweise eine Mehrheit von Verbindungsstreben, besonders bevorzugt sind alle Verbindungsstreben von der Ritzeldrehachse gleich weit entfernt.

Wie oben angedeutet ist, kann das durchmessergrößte Ritzel im Bereich der Verbindungsstreben mit dem nächst kleineren Ritzel körperlich verbunden sein. Die hierfür vorgeschlagenen Verbindungsstreben können radial am durchmessergrößten Ritzel sehr weit außen liegen, etwa radial knapp innerhalb des Zahnkranzes des axial benachbarten nächst kleineren Ritzels. Bevorzugt sind die Verbindungsstreben im radial äußersten Drittel des durchmessergrößten Ritzels angeordnet. Die radiale Gesamterstreckung des durchmessergrößten Ritzels wird dabei von der Ritzeldrehachse bis zur radial äußersten Zahnspitze gemessen, auch wenn das Ritzel zentral eine Ausnehmung aufweist.

Die Ausbildung der bezeichneten Verbindung erleichtert den Betrieb des durchmessergrößten Ritzels erheblich, da diese körperliche Verbindung des durchmessergrößten Ritzels mit dem axial benachbarten nächst kleineren Ritzel an den Verbindungsstreben die Biegesteifigkeit des durchmessergrößten Ritzels für den Lastfall einer Biegung um eine zur Ritzeldrehachse orthogonale Biegeachse erhöht.

Konstruktiv kann die körperliche Verbindung der Verbindungsstreben mit dem nächst kleineren Ritzel durch Verbindungsmittel realisiert sein, welche unter Überbrückung des zwischen dem durchmessergrößten und dem nächst kleineren Ritzel bestehenden Axialspalts jeweils zwischen einer Verbindungsstrebe und dem nächst kleineren Ritzel verlaufen. Die Verbindungsmittel sind sowohl mit der Verbindungsstrebe als auch mit dem nächst kleineren Ritzel Drehmoment übertragend gekoppelt. Zur Erhöhung der Steifigkeit und Formstabilität der Fahrrad-Hinterrad-Ritzelanordnung insgesamt sind die Verbindungsmittel bevorzugt sowohl mit der Verbindungsstrebe als auch mit dem nächst kleineren Ritzel auch Axialkraft übertragend gekoppelt.

Für eine möglichst effektive Übertragung von Drehmoment von Tretkurbeln auf das durchmessergrößte Ritzel ist das durchmessergrößte Ritzel bevorzugt derart ausgebildet, dass für wenigstens eine Ritzel-Speiche, vorzugsweise für alle Ritzel-Speichen eines Speichenbereichs, besonders bevorzugt für alle Ritzel-Speichen des durchmessergrößten Ritzels gilt, dass ihr radial inneres Längsende dem radial äußeren Längsende derselben Ritzel-Speiche in Antriebsdrehrichtung der Ritzelanordnung vorauseilt.

Zur Vermeidung unerwünschter Schubspannungsspitzen sowie zur möglichst gleichmäßigen Lastverteilung in der wenigstens einen Ritzel-Speiche während der Drehmomentübertragung ist die wenigstens eine Ritzel-Speiche bevorzugt um eine zur Ritzeldrehachse parallele Krümmungsachse derart gekrümmt ausgebildet, dass sie bei Betrachtung in Antriebsdrehrichtung konkav und bei Betrachtung entgegen der Antriebsdrehrichtung konvex gekrümmt ist. Bevorzugt sind die Ritzel-Speichen eines Speichenbereichs des durchmessergrößten Ritzels im Wesentlichen gleich ausgebildet - mit der Ausnahme der oben genannten Verbindungsspeichen, die über eine Verbindungsstrebe mit der in einem Umlaufsinn unmittelbar benachbarten Ritzel-Speiche verbunden sind.

Zur Erhöhung der Stabilität, insbesondere Formstabilität, der erfindungsgemäßen Ritzelanordnung kann gemäß einer Weiterbildung der vorliegenden Erfindung vorgesehen sein, dass das dem durchmessergrößten Ritzel axial unmittelbar benachbarte Ritzel gesondert von dem durchmessergrößten Ritzel, aber einstückig mit dem auf seiner vom durchmessergrößten Ritzel wegweisenden Seite axial benachbarten Ritzel ausgebildet ist. Vorzugsweise ist das dem durchmessergrößten Ritzel axial unmittelbar benachbarte Ritzel mit mehreren auf seiner vom durchmessergrößten Ritzel wegweisenden Seite angeordneten Ritzeln einstückig ausgebildet.

Ganz allgemein kann gelten, dass zwei axial benachbarte Ritzel, insbesondere das durchmessergrößte Ritzel und das diesem axial unmittelbar benachbarte Ritzel, gesondert voneinander ausgebildet und durch eine Mehrzahl von den zwischen den benachbarten Ritzeln bestehenden Axialspalt überbrückende Verbindungsmittel Drehmoment übertragend und bevorzugt auch Axialkraft übertragend gekoppelt sind. Die Verbindungsmittel können als gesonderte Verbindungsmittel gesondert von jedem der beiden axial unmittelbar benachbarten Ritzeln ausgebildet und mit jedem dieser Ritzel verbunden worden sein. Alternativ oder zusätzlich können einige oder alle Verbindungsmittel einstückig mit einem der beiden axial unmittelbar benachbarten Ritzeln ausgebildet sein und mit dem jeweils anderen Ritzel verbunden worden sein.

Eine besonders feste und stabile Ritzelanordnung kann dadurch erhalten werden, dass wenigstens zwei axial unmittelbar benachbarte, insbesondere ein kleineres Ritzel als das durchmessergrößte Ritzel und das diesem axial unmittelbar benachbarte Ritzel, einstückig miteinander ausgebildet und durch eine Mehrzahl von den zwischen den benachbarten Ritzeln bestehenden Axialspalt überbrückenden Verbindungsmitteln in Form von Stegen Drehmoment übertragend und bevorzugt auch Axialkraft übertragend gekoppelt sind. In diesem Falle können die Stege als Verbindungsmittel mit jedem der beiden axial unmittelbar benachbarten Ritzel einstückig materialzusammenhängend ausgebildet sein. Die Stege können beispielsweise durch spanabhebende Verfahren, insbesondere durch Fräsen, aus dem die Ritzel bildenden Materialstück gebildet sein.

Vorteilhafterweise kann die Ritzelanordnung umso stabiler gebildet werden, je weiter radial außen die Verbindungsmittel angeordnet sind. Die Voraussetzung für eine Anordnung der Verbindungsmittel radial möglichst weit außen kann dadurch erreicht werden, dass die Verbindungsmittel mit dem kleineren der zwei axial benachbarten Ritzel jeweils in Umfangsrichtung an einem Ort verbunden sind, an dem sich an dem kleineren der zwei axial benachbarten ein Zahn befindet. Da der Zahn radial weiter ausragt als ein Zahnzwischenraumbereich des Zahnkranzes desselben Ritzels, kann das zum Zahn beitragende Material, etwa ein Abschnitt des Zahnfußes, zur Kopplung des Verbindungsmittels mit dem kleineren der beiden benachbarten Ritzel verwendet werden - unabhängig davon, ob das Verbindungsmittel einstückig oder gesondert mit dem kleineren der beiden Ritzel ausgebildet ist.

Dann, wenn die Drehmomentübertragung von der Fahrradkette zum hinteren Laufrad stets über das durchmessergrößte Ritzel erfolgt, können die Verbindungsmittel - unabhängig davon, ob diese gesondert von den Ritzeln, die sie verbinden, oder einstückig mit diesen ausgebildet sind - besonders dünn ausgebildet sein, wenn ihr näher bei dem durchmessergrößeren Ritzel gelegenes Längsende dem entgegengesetzten, näher bei dem durchmesserkleineren Ritzel der axial unmittelbar benachbarten Ritzel gelegenen Längsende in Antriebsdrehrichtung der Ritzelanordnung vorauseilt.

Die zuvor beschriebene Ausgestaltung des durchmessergrößten Ritzels in der Ritzelanordnung ist derart vorteilhaft, dass sich die Anmelderin vorbehält, gesonderten Schutz für eine um eine Ritzeldrehachse drehbare Fahrrad-Hinterrad-Ritzelanordnung mit einer Mehrzahl von bezüglich der Ritzeldrehachse koaxialen, mit axialem Abstand voneinander angeordneten Ritzeln unterschiedlicher Zähneanzahlen, welche zum formschlüssigen Eingriff mit einer Fahrradkette ausgebildet sind, mit den Merkmalen der kennzeichnenden Teile eines oder mehrerer der Beispiele 7 bis 18 anzustreben. Für die Realisierung der Vorteile des in diesen Beispielen genannten durchmessergrößten Ritzels kommt es auf die Verwirklichung der eingangs genannten Gangbereich-Packungskoeffizienten nicht an. Umgekehrt erleichtert die Verwendung des in den Merkmalen der kennzeichnenden Teile der Beispiele 7 bis 18 beschriebenen durchmessergrößten Ritzels die Verwirklichung einer Fahrrad-Hinterrad-Ritzelanordnung mit den genannten Werten für den Gangbereich-Packungskoeffizienten. Die vorliegende Erfindung betrifft daher auch eine um eine Ritzeldrehachse drehbare Fahrrad-Hinterrad-Ritzelanordnung mit einer Mehrzahl von bezüglich der Ritzeldrehachse koaxialen, mit axialem Abstand voneinander angeordneten Ritzeln unterschiedlicher Zähneanzahlen, welche zum formschlüssigen Eingriff mit einer Fahrradkette ausgebildet sind, wobei die Ritzelanordnung die Merkmale der kennzeichnenden Teile eines oder mehrerer der Beispiele 7 bis 18 aufweist.

Die vorliegende Erfindung betrifft weiter eine Fahrrad-Hinterrad-Antriebsanordnung mit einer wie oben beschrieben ausgebildeten Fahrrad-Hinterrad-Ritzelanordnung und mit einer Fahrradkette.

Wie oben bereits angedeutet wurde, kann es am durchmesserkleinsten Ritzel aufgrund der Schrägstellung der Kette zu unerwünschten Wirkungen kommen, wie etwa dem Schleifen der Kette am axial benachbarten nächst größeren Ritzel. Hier ist die axiale Führung der Kette und damit die Begrenzung der Kettenbewegung in axialer Richtung auf dem durchmesserkleinsten Ritzel von besonderem Interesse. Diese axiale Führung der Kette auf dem durchmesserkleinsten Ritzel kann dadurch verbessert und damit die axiale Beweglichkeit der Kette auf dem Ritzel eingeschränkt werden, dass der Zahnkranz wenigstens des durchmesserkleinsten Ritzels der Fahrrad-Hinterrad-Ritzelanordnung mit einer sich längs eines Umlaufs in Umfangsrichtung zwischen Zähnen und diesen unmittelbar benachbarten Zahnzwischenräumen verändernden axialen Ritzeldicke ausgebildet ist. Somit können axial dickere Bereiche am Ritzel ausgebildet werden, welche die Fahrradkette dann axial führen, wenn die Fahrradkette mit dem durchmesserkleinsten Ritzel kämmt. In den axial dünneren Bereichen des Ritzels kann dagegen axiales Spiel zwischen der Fahrradkette und Ritzelabschnitten vorhanden sein, um zwischen der Fahrradkette und dem Ritzel wirkende Reibungseffekte gering zu halten. Da die Fahrradkette in Kettenlängsrichtung eine periodische Struktur hat, ist bevorzugt auch die sich verändernde axiale Ritzeldicke periodisch verändernd ausgebildet.

Um ein möglichst verlustfreies Eintauchen der Ritzelzähne in dafür vorgesehene Zwischenräume der Fahrradkette und ein ebenso verlustfreies Ausfahren der Ritzelzähne aus diesen Zwischenräumen zu ermöglichen, ist die axiale Dicke des Ritzels im Bereich der Zahnzwischenräume vorteilhafterweise größer als im Bereich der Zähne. Das so ausgebildete Ritzel führt die Fahrradkette axial vorteilhafterweise ausschließlich im Bereich der Zahnzwischenräume, während die Zähne des Ritzels im Kraft übertragenden Eingriff mit der Fahrradkette zwischen Laschenpaaren der Fahrradkette ausschließlich zur Kraftübertragung zwischen den Rollen der Fahrradkette und dem Ritzel dienen.

Die Fahrradkette kann eine an sich bekannte Rollenkette mit einer Mehrzahl von in Kettenlängsrichtung äquidistant mit parallelen Rollendrehachsen angeordneten Rollen sein, welche Rollen abwechselnd über Paare paralleler Innenlaschen und Außenlaschen miteinander verbunden sind, wobei jede Innenlasche im Bereich einer mit ihr verbundenen Rolle in Richtung der Rollendrehachse zwischen der Rolle und einer Außenlasche angeordnet ist.

Bei einer solchen Fahrradkette ist es schon aus Gewichtsgründen vorteilhaft, wenn sowohl die Außenlaschen wie auch die Innenlaschen in einem Längsmittelabschnitt eine geringere Höhe aufweisen als an ihren Längsendabschnitten.

Eine Anordnung der oben genannten Verbindungsmittel zur Kopplung zweier axial unmittelbar benachbarter Ritzel kann dann vorteilhaft radial möglichst weit außen erfolgen, wenn die Verbindungsmittel radial derart weit außen mit dem von zwei axial benachbarten Ritzeln verbunden sind, dass während eines kämmenden Eingriffs der Fahrradkette mit dem kleineren der zwei der zwei axial benachbarten Ritzel ein radial innerer Rand der Längsendbereiche der Innen- oder/und der Außenlaschen näher bei der Ritzeldrehachse gelegen ist als ein radial äußerer Rand der Verbindungsmittel.

Für eine möglichst präzise axiale Führung der Fahrradkette wenigstens an dem durchmesserkleinsten Ritzel im Wesentlichen durch die Zahnzwischenraumbereiche des Ritzels mit möglichst wenig axialem Bewegungsspiel der Fahrradkette am Ritzel ist es vorteilhaft, wenn wenigstens für das durchmesserkleinste Ritzel gilt, dass die axiale Breite einer zum Anlageeingriff mit einer Rolle der Fahrradkette im Bereich eines Zahnzwischenraums ausgebildeten Rollen-Auflagefläche des Ritzels um nicht mehr als 10 % von der axialen Abmessung einer zur Anlage an der Rollen-Auflagefläche ausgebildeten Rollen-Mantelfläche - bezogen auf die axiale Abmessung der Rollen-Mantelfläche - abweicht. Je besser die axialen Abmessungen der Rollen-Auflagefläche des Ritzels und der an ihr anliegenden Rollen-Mantelfläche übereinstimmen, desto exakter kann die Fahrradkette am Ritzel geführt werden. Vorzugsweise weist daher die axiale Breite der Rollen-Auflagefläche um nicht mehr als 5 %, besonders bevorzugt um nicht mehr als 3 % von der axialen Abmessung der Rollen-Mantelfläche ab.

Während eines kämmenden Eingriffs mit dem wenigstens einen Ritzel, insbesondere dem durchmesserkleinsten Ritzel, weist ein Innenlaschenpaar üblicherweise eine innere Innenlasche auf, welche axial näher bei dem Axialende der Ritzelanordnung mit dem durchmessergrößten Ritzel gelegen ist, und weist eine äußere Innenlasche auf, welche axial näher bei dem Axialende der Ritzelanordnung mit dem durchmesserkleinsten Ritzel gelegen ist. Längsmittelabschnitte der inneren und der äußeren Innenlasche des Innenlaschenpaars sind dann in Kettenlängsrichtung zwischen zwei umittelbar mit diesem Innenlaschenpaar verbundenen Rollen gelegen, wobei während einer Drehmomentübertragung von der Fahrradkette auf das mit dieser kämmende Ritzel ein Eintauchabschnitt eines Zahns zwischen die Längsmittelabschnitte eintaucht und wieder ausfährt.

Zur Vermeidung unerwünschter Reibung zwischen dem Eintauchabschnitt eines Zahns und der Fahrradkette, insbesondere im Bereich der axial näher beieinanderliegenden Innenlaschen der Innenlaschenpaare, kann gemäß einer vorteilhaften Weiterbildung der vorliegenden Erfindung daran gedacht sein, dass für wenigstens einen Zahn, vorzugsweise für eine Mehrzahl von Zähnen, besonders bevorzugt für alle Zähne wenigstens des durchmesserkleinsten Ritzels gilt, dass die axiale Breite des Eintauchabschnitts des wenigstens einen Zahns kleiner ist als eine lichte axiale Weite der Längsmittelabschnitte der äußeren und der inneren Innenlaschen voneinander, sodass während der Drehmomentübertragung die vom durchmessergrößten Ritzel wegweisende Stirnfläche des zwischen die Längsmittelabschnitte eingetauchten Eintauchabschnitts durch einen Axialspalt von dem Längsmittelabschnitt der ihm axial gegenüberliegenden äußeren Innenlasche des Innenlaschenpaars getrennt angeordnet ist.

Um dafür zu sorgen, dass wenigstens das durchmesserkleinste Ritzel nur in den Umfangsabschnitten zwischen unmittelbar aufeinanderfolgenden Zähnen (Zahnzwischenräume) die mit dem jeweiligen Ritzel kämmende Fahrradkette axial führt, und um weiter unerwünschte Reibung und damit Verlustleistung beim Fahrradfahren zu vermeiden, ist bevorzugt die axiale Ritzelbreite im Bereich des Zahnfußes radial innerhalb des Eintauchabschnitts kleiner als die lichte axiale Weite zwischen den der Ritzeldrehachse zugewandten Rändern der parallelen Innenlaschen eines bzw. jedes Innenlaschenpaars in dem Längsmittelabschnitt bzw. den Längsmittelabschnitten, sodass auch ein der Ritzeldrehachse zugewandter Rand des Längsmittelabschnitts der äußeren Innenlasche während der Drehmomentübertragung durch einen Spalt von einem Zahnfuß eines zwischen sie eingetauchten Eintauchabschnitts getrennt angeordnet ist.

Für die Erzielung der vorteilhaften Wirkungen im Zusammenhang mit dem durchmesserkleinsten Ritzel kommt es auf die Verwendung des zuvor beschriebenen durchmessergrößten Ritzels und auf die Realisierung der Werte der eingangs beschriebenen Gangbereich-Packungskoeffizienten nicht an, sodass die vorliegende Erfindung auch eine Fahrrad-Hinterrad-Antriebsanordnung mit einer Fahrrad-Hinterrad-Ritzelanordnung und mit einer Fahrradkette betrifft, wobei der Zahnkranz wenigstens des durchmesserkleinsten Ritzels der Fahrrad-Hinterrad-Ritzelanordnung mit einer sich längs eines Umlaufs in Umfangsrichtung zwischen Zähnen und diesen unmittelbar benachbarten Zahnzwischenräumen verändernden, insbesondere periodisch verändernden axialen Ritzeldicke ausgebildet ist, wobei die axiale Dicke des Ritzels im Bereich der Zahnzwischenräume größer ist als im Bereich der Zähne, gegebenenfalls unter Hinzunahme der kennzeichnenden Merkmale eines oder mehrerer der Beispiele 20 bis 22.

Die vorliegende Erfindung betrifft weiter eine Fahrrad-Antriebsanordnung mit einer Fahrrad-Hinterrad-Ritzelanordnung oder einer Fahrrad-Hinterrad-Antriebsanordnung, insbesondere mit einer Hinterrad-Ritzelanordnung, wie sie oben beschrieben wurde, oder/und mit einer Hinterrad-Antriebsanordnung, wie sie oben beschrieben wurde, und mit genau einem vorderen, tretkurbelnäheren Kettenblatt, wobei das Kettenblatt eine technisch wirksame Zähneanzahl von zwischen 30 und 40, vorzugsweise von zwischen 34 und 36, die genannten Grenzen jeweils eingeschlossen. Die "wirksame" Zähneanzahl ist bei unmittelbar mit den Tretkurbeln verbundenem Kettenblatt die Zähneanzahl des Kettenblattes selbst. Dann jedoch, wenn das Kettenblatt über eine Getriebeanordnung, etwa ein Planetengetriebe, mit den Tretkurbeln verbunden ist, ergibt sich die wirksame Zähneanzahl des Kettenblattes aus der tatsächlichen Zähneanzahl des Kettenblattes unter Berücksichtigung des Übertragungsverhältnisses der im Kraftfluss zwischen Tretkurbeln und Zahnkranz des Kettenblattes vorgesehenen Getriebeanordnung. Die wirksame Zähneanzahl eines mittels Getriebeanordnung mit den Tretkurbeln gekoppelten Kettenblattes ist die Zähneanzahl, die ein unmittelbar - also ohne Zwischenschaltung einer Getriebeanordnung - mit den Tretkurbeln verbundenes Kettenblatt hätte, das eine identische Drehmomentübertragung von den Tretkurbeln zum gleichen Hinterrad-Ritzel bewirkt.

Mit der Hinterrad-Ritzelanordnung, d.h. mit der dort vorhandenen Anzahl an Ritzeln und ihrer jeweiligen Zähneanzahl werden objektive technische Gegebenheiten für den Fahrbetrieb möglichst optimiert bereitgestellt, wie zum Beispiel die mögliche Übertragung-Bandbreite und die Abstufung der einzelnen einstellbaren Übertragungsverhältnisse.

Allerdings sind die körperlich-individuellen Charakteristika der einzelnen Fahrradfahrer stark unterschiedlich. Selbst Fahrradfahrer mit in etwa gleicher Tretleistung können, während sie die gleiche Tretleistung abgeben, unterschiedliche Trittfrequenzen und unterschiedliche Trittkräfte realisieren.

Die individualisierte Anpassung der durch die Hinterrad-Ritzelanordnung bereitgestellten objektiven technischen Übertragungsgegebenheiten erfolgt somit vorteilhaft durch Zuordnung eines die körperlichen Präferenzen des jeweiligen Fahrradfahrers berücksichtigenden Kettenblatts zu der Hinterrad-Ritzelanordnung. Für die zuvor beschriebene erfindungsgemäße Hinterrad-Ritzelanordnung bildet somit ein Kettenblatt mit einer technisch wirksamen Zähneanzahl von zwischen 30 und 40 eine Vielzahl individueller Präferenzen unterschiedlicher Fahrradfahrer, wie etwa Trittfrequenzen und dergleichen, ab. Somit kann sehr einfach ein Fahrrad durch Ausstattung mit der erfindungsgemäßen Hinterrad-Ritzelanordnung grundsätzlich für eine bestimmte Bandbreite an Übertragungsverhältnissen und eine ebenfalls bestimmte Abstufung zwischen diesen hergerichtet und durch Auswahl lediglich des geeigneten Kettenblatts für den jeweiligen Fahrertyp individualisiert werden.

Verglichen mit dem derzeit führenden 1-fach-Kettenschaltungssystem "XX1" kann beispielsweise das durchmessergrößte Hinterradritzel der erfindungsgemäßen Ritzelanordnung 8 Zähne mehr aufweisen und kann das Kettenblatt wenigstens 4 Zähne mehr aufweisen. Somit wird nicht nur ein noch kleineres Übertragungsverhältnis zwischen Tretkurbel und Hinterrad erreicht, sondern durch die Verwendung insgesamt durchmessergrößerer Ritzel und Kettenblätter kann überdies die maximal auftretende Zugbelastung der Fahrradkette bei ansonsten gleicher Antriebsleistung erheblich reduziert werden.

Bei unverändertem durchmesserkleinsten Ritzel kann überdies durch die oben genannte Erhöhung der Zähneanzahl des Kettenblatts gegenüber dem Stand der Technik ("XX1") auch ein - verglichen mit dem Stand der Technik - noch größeres größtes Übertragungsverhältnis eingestellt werden.

Die vorliegende Erfindung wird nachfolgend anhand der beiliegenden Zeichnungen näher erläutert. Es stellt dar:
- Figur 1: eine Längsschnittansicht einer erfindungsgemäßen Ausführungsform einer Fahrrad-Hinterrad-Ritzelanordnung in einer die Ritzeldrehachse enthaltenden Schnittebene,
- Figur 2: eine axiale Frontansicht der Ritzelanordnung von Figur 1,
- Figur 3: eine axiale Rückansicht der Ritzelanordnung der Figuren 1 und 2,
- Figur 4: eine axiale Ansicht des durchmesserkleinsten Ritzels der Ritzelanordnung der Figuren 1 bis 3,
- Figur 5: eine Längsschnittansicht durch das durchmesserkleinste Ritzel von Figur 4 längs der die Ritzeldrehachse enthaltenden Schnittebene V-V und
- Figur 6: eine Längsschnittansicht durch das durchmesserkleinste Ritzel von Figur 4 längs der die Ritzeldrehachse enthaltenden Schnittebene VI-VI.

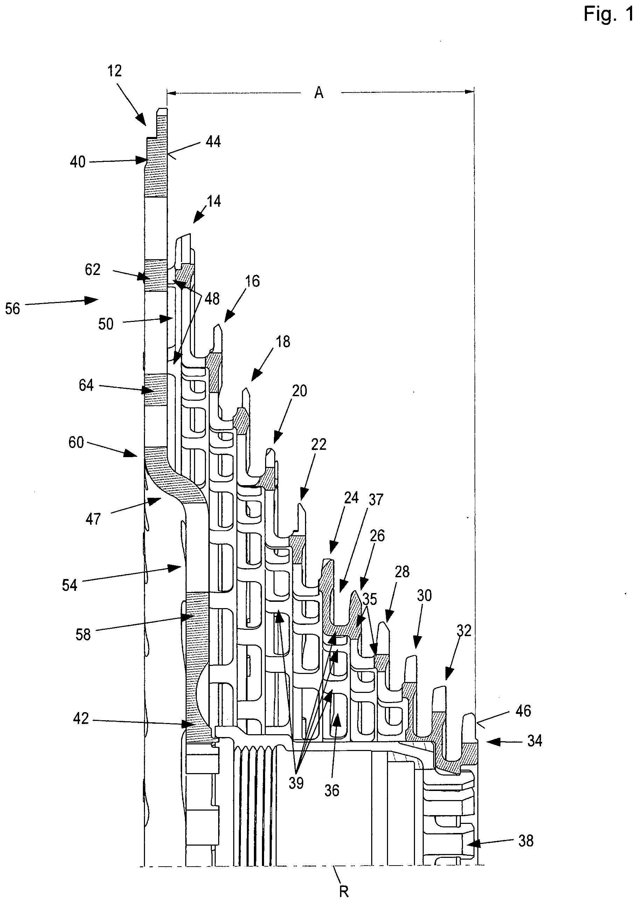

In den Figuren 1 bis 3 ist eine erfindungsgemäße Ausführungsform einer Fahrrad-Hinterrad-Ritzelanordnung allgemein mit 10 bezeichnet. Die Ritzelanordnung 10 weist im dargestellten Beispiel 12 Ritzel auf, welche mit den Bezugszeichen 12 bis 34 bezeichnet sind. Das durchmessergrößte Ritzel trägt dabei das Bezugszeichen 12, die in Richtung der Ritzelachse R folgenden nächst kleineren Ritzel tragen die Bezugszeichen 14 bis 34, wobei mit 34 das durchmesserkleinste Ritzel der Ritzelanordnung 10 bezeichnet ist.

Die Ritzel 14 bis 34 sind dabei einstückig materialzusammenhängend als ein Ritzeldom 36 ausgebildet. Der Ritzeldom 36 ist auf einem Domträger 38 abgestützt, der mit einer nicht dargestellten Fahrradnabe verbindbar ist. Nur das durchmessergrößte Ritzel 12 ist gesondert von den übrigen 11 Ritzeln 14 bis 34 ausgebildet.

Das durchmesserkleinste Ritzel 34 hat 10 Zähne, das durchmessergrößte Ritzel 12 hat 50 Zähne. Vom durchmesserkleinsten Ritzel 34 bis zum durchmessergrößten Ritzel 12 weisen die Ritzel der Ritzelanordnung 10 folgende Zähneanzahlen auf 10-12-14-16-18-21-24-28-32-36-42-50. Der größte prozentuale Sprung in der Zähneanzahl erfolgt somit vom kleinsten Ritzel 34 auf das nächst größere Ritzel 32. Dieser Sprung in der Zähneanzahl beträgt bezogen auf die Zähneanzahl des durchmesserkleinsten Ritzels 34 20 %. Alle übrigen Zähneanzahl-Sprünge von einem Ritzel auf das nächst größere Ritzel sind prozentual kleiner als 20 %. Dadurch wird eine feine Abstufung der Übertragungsverhältnisse erreicht, die mit der Ritzelanordnung 10 bereitgestellt werden können.

Der Gangbereich-Quotient der Ritzelanordnung 10 beträgt somit 50 : 10 = 5.

Der einstückige Aufbau des Ritzeldoms 36 sei nachfolgend an den axial unmittelbar benachbarten Ritzeln 24 und 26 exemplarisch erläutert:
Zwischen den Ritzeln 24 und 26 ist ein Axialspalt 37 vorhanden, der von einem Steg 39 überbrückt ist. Der Steg 39 ist einstückig sowohl mit dem Ritzel 24 als auch mit dem Ritzel 26 ausgebildet. Der Steg 39 kann beispielsweise gebildet sein, indem ursprünglich in Umfangsrichtung vor und hinter dem Steg gelegene Materialbereiche unter Belassung des Stegs entfernt wurden, etwa durch Fräsen.

Wie vor allem am Beispiel des Ritzels 26 zu erkennen ist, in welchem die Schnittebene von Figur 1 einen Zahn schneidet, ist der Steg 39 - wie vorteilhafterweise alle übrigen Stege 39 des Ritzeldoms 36 auch - an einer Umfangsposition mit dem kleineren Ritzel 26 verbunden, an der auch ein Zahn ausgebildet ist. Dies ermöglicht eine Ausbildung des Steges 39 soweit radial außen wie möglich, was die Steifigkeit des Ritzeldoms 36 insgesamt erhöht. Alle auf dieselbe Art und Weise einstückig zusammenhängenden Ritzel 14 bis 34 des Ritzeldoms 36 weisen einen massiven Zahnkranz 35 auf, an dem die Zähne des jeweiligen Ritzels und die Stege 39 ausgebildet sind.

Wie für Ritzel typisch, weist auch das durchmessergrößte Ritzel 12 radial ganz außen einen vorzugsweise in Umfangsrichtung massiven Zahnkranz 40 und radial ganz innen einen vorzugsweise in Umfangsrichtung ebenfalls massiven Nabenbereich 42 auf. Der Zahnkranz 40 ist dazu ausgebildet, in an sich bekannter Weise mit einer Fahrradkette in kämmenden Eingriff zu treten, um mittels der Fahrradkette (in den Figuren 1 bis 3 nicht gezeigt) Drehmoment von den ebenfalls nicht dargestellten Tretkurbeln eines Fahrrads zur Ritzelanordnung 10 zu übertragen.

Der Nabenbereich 42 dient dazu, Drehmoment von der Ritzelanordnung 10 auf die in den Figuren nicht dargestellte Hinterradnabe und damit auf das hintere Laufrad des nicht dargestellten Fahrrads zu übertragen.

Um das mit der nicht dargestellten Fahrradkette kämmende Ritzel zu wechseln, wirkt die Ritzelanordnung 10 in an sich bekannter Weise mit einem ebenfalls in den Figuren nicht dargestellten Schaltwerk zusammen. Das Schaltwerk wird dabei mit einer Verlaufsbahn, die eine axiale Komponente in Richtung der Ritzeldrehachse R aufweist, über den axialen Erstreckungsbereich der Ritzelanordnung 10 hinweg bewegt. Die Axialpositionen des Schaltwerks relativ zur Ritzelanordnung 10, an denen das Schaltwerk nahe des jeweils kettenführenden Ritzels verweilt, sind an den sogenannten "Frontflächen" der Ritzel orientiert. Die Frontflächen sind im vorliegenden Beispiel orthogonal zur Ritzeldrehachse R orientiert, wobei an jedem Ritzel die radial äußerstmögliche Frontfläche heranzuziehen ist. Frontfläche ist dabei jener radial äußerste zur Ritzeldrehachse R orthogonale Stirnflächenabschnitt eines Ritzels, welcher auf der zum jeweils nächst kleineren Ritzel weisenden Stirnseite bzw. im Falle des durchmesserkleinsten Ritzels 34 auf der vom durchmessergrößten Ritzel 12 wegweisenden Stirnseite gelegen ist.

Im Falle des durchmessergrößten Ritzels 12 ist die Frontfläche 44 auf der zum durchmesserkleinsten Ritzel 34 hinweisenden Stirnseite des Zahnkranzes 40 ausgebildet. Im Falle des durchmesserkleinsten Ritzels 34 ist dessen Frontfläche 46 an den Zahnflanken auf der vom durchmessergrößten Ritzel 12 wegweisenden Stirnseite des Ritzels 34 ausgebildet.

Der axiale Abstand A zwischen den Frontflächen 44 und 46 des durchmessergrößten Ritzels 12 bzw. des durchmesserkleinsten Ritzels 34 beträgt im dargestellten Beispiel 40,5 mm.

Der Packungsdichte-Quotient der Ritzelanordnung 10 beträgt daher 12 : 40,5 = 0,296.

Der Gangbereich-Packungskoeffizient der Ritzelanordnung 10 beträgt daher 5 × 0,296 = 1,48.

Mit der Ritzelanordnung 10 ist es daher möglich, selbst an einem Mountainbike, das für sehr hohe Steigungen ausgebildet ist, mit nur einem einzigen Kettenblatt an den Tretkurbeln auszukommen. Vorzugsweise wird hier ein einziges Kettenblatt mit einer wirksamen Zähneanzahl im Bereich von 30 bis 40 Zähnen verwendet. Somit findet vom Kettenblatt zum durchmessergrößten Ritzel 12 eine Drehzahluntersetzung statt und findet vom Kettenblatt zum durchmesserkleinsten Ritzel 34 eine Drehzahlübersetzung statt. Aufgrund der stets geltenden Energieerhaltung wird Drehmoment vom Kettenblatt zum durchmessergrößten Ritzel 12 übersetzt und zum durchmesserkleinsten Ritzel 34 untersetzt. Übersetzung und Untersetzung sind in der vorliegenden Anmeldung mit dem Oberbegriff "Übertragung" bezeichnet.

Um im Bereich der Zahnkränze der Ritzel 12 bis 34 den oben genannten Abstand A zwischen den Frontflächen 44 und 46 realisieren zu können, ohne dass im Bereich der Hinterradnabe, also etwa am Nabenbereich 42 des Ritzels 12, ein ähnlich großer axialer Abstand für die Montage der Ritzelanordnung 10 bereitgestellt werden muss, weist das durchmessergrößte Ritzel 12 im dargestellten Beispiel etwa im Bereich seiner Radialmitte (gemessen stets von der Ritzeldrehachse R) eine Kröpfung 47 auf. Ein radial innerhalb der Kröpfung 47 gelegener Ritzelbereich des durchmessergrößten Ritzels 12 befindet sich daher näher an dem durchmesserkleinsten Ritzel 34 als ein radial außerhalb der Kröpfung 47 gelegener Ritzelbereich des Ritzels 12.

Wie in Figur 1 weiter zu erkennen ist, stützt sich das durchmessergrößte Ritzel 12 mit seiner Frontfläche 44 an Axialvorsprüngen 48 des nächst kleineren, ihm unmittelbar axial benachbarten Ritzels 14 ab. Die Axialvorsprünge 48 sind im dargestellten Beispiel einstückig materialzusammenhängend mit dem Ritzel 14 ausgebildet. Dies muss jedoch nicht so sein. Anstelle der einstückigen Axialvorsprünge 48 können auch gesondert von den Ritzeln 12 und 14 ausgebildete axiale Abstandshalter zwischen den Ritzeln 12 und 14 vorgesehen sein, um den zwischen diesen Ritzeln vorhandenen Axialspalt 50 zu überbrücken.

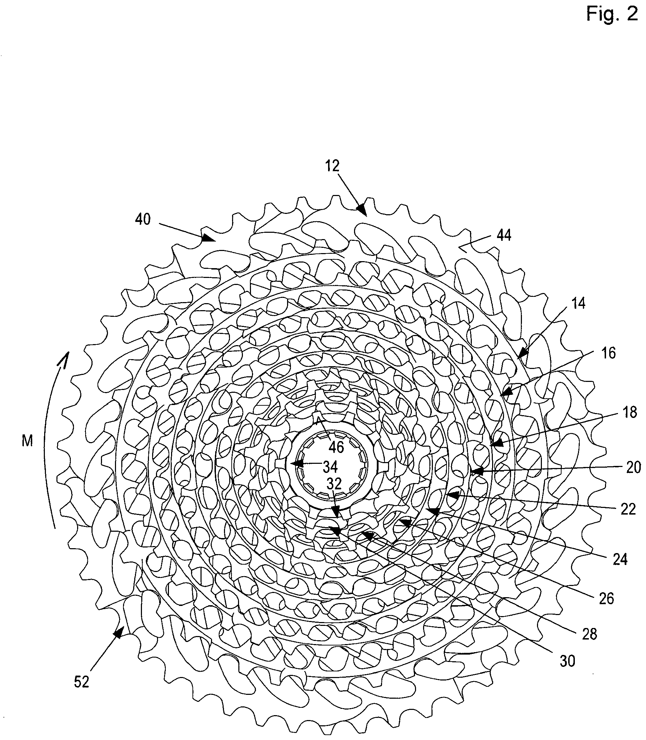

Figur 2 zeigt eine Frontansicht mit Blickrichtung längs der Ritzeldrehachse R auf die Ritzelanordnung 10 von Figur 1. Man blickt somit in Figur 2 auf die Frontflächen 44 und 46 des durchmessergrößten Ritzels 12 bzw. des durchmesserkleinsten Ritzels 34 sowie auf alle Frontflächen der übrigen Ritzel 14 bis 32, die jedoch in Figur 2 nicht näher bezeichnet sind. In Figur 2 zu erkennen sind stirnseitige Einprägungen bzw. Vertiefungen 52 in der Frontfläche 44 des durchmessergrößten Ritzels 12. Diese Vertiefungen 52 dienen als Schalthilfe beim Schalten vom Ritzel 14 auf das größere Ritzel 12.

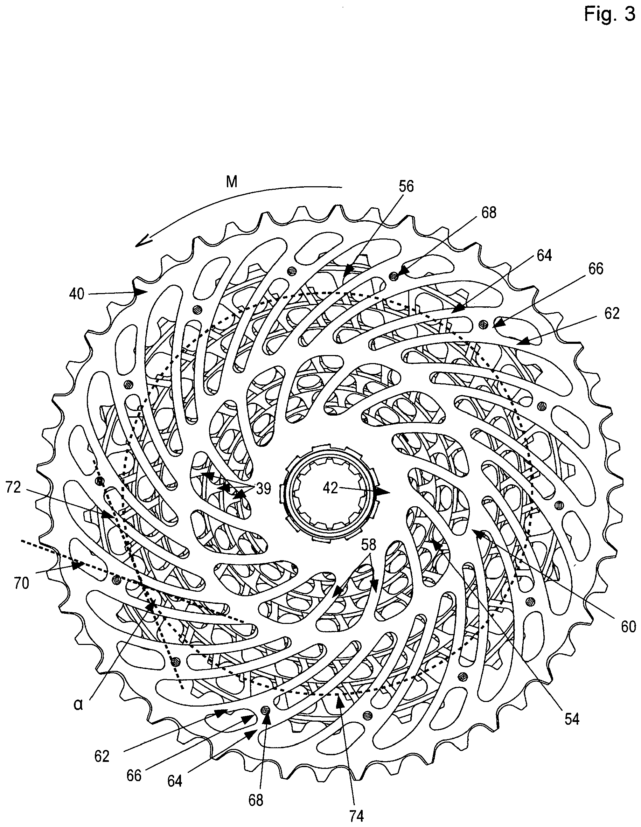

Figur 3 zeigt eine Rückansicht mit bezogen auf die Blickrichtung von Figur 2 entgegengesetzter Betrachtungsrichtung. In Figur 3 sind deshalb einige Details der konstruktiven Ausgestaltung des durchmessergrößten Ritzels 12 zu erkennen, die die Realisierung der Ritzelanordnung 10 mit dem nachgewiesenen Gangbereich-Packungskoeffizienten befördern.

Wie bereits Figur 2 gezeigt hat, sind die Ritzel 14 bis 34 des Ritzeldoms 36 in Skelettbauweise realisiert, d. h. mit massiven radial äußeren Zahnkränzen, an denen die Zähne und Zahnzwischenräume ausgebildet sind, und mit den speichenartigen Stegen 39 radial innerhalb der Zahnkränze.

So ist auch das durchmessergrößte Ritzel 12 zwischen dem massiven Zahnkranz 40 radial außen und dem ebenfalls massiven Nabenbereich 42 radial innen mit Ritzel-Speichen ausgebildet, um ohne nennenswerte Steifigkeitseinbuße das Gewicht des durchmessergrößten Ritzels 12 zu reduzieren.

Im vorliegenden Beispiel weist das durchmessergrößte Ritzel 12 einen radial inneren Speichenbereich 54 und einen radial äußeren Speichenbereich 56 auf. Der radial innere Speichenbereich 54 weist eine geringere Anzahl von Ritzel-Speichen 58 auf als der radial äußere Speichenbereich 56. Der radial innere und der radial äußere Speichenbereich 54 bzw. 56 sind durch einen massiven Zwischenringbereich 60, welcher vorzugsweise kreisringförmig um die Ritzeldrehachse R herum ausgebildet ist, voneinander abgegrenzt. Die Ausbildung des Zwischenringbereichs 60 ermöglicht die unterschiedliche Anzahl an Ritzel-Speichen in den Speichenbereichen 54 und 56.

Wie ein Vergleich der Figuren 1 und 3 miteinander zeigt, ist die Kröpfung 47 im massiven Zwischenringbereich 60 ausgebildet, sodass die Kröpfung vollständig in einem Radialbereich massiven Materials ausgebildet ist. Dadurch können die Ritzel-Speichen beiderseits der Kröpfung 47 beziehungsweise beiderseits des Zwischenringbereichs 60 als ebene Ritzel-Speichen ausgebildet sein, was für deren Steifigkeit und Formstabilität unter Last vorteilhaft ist.

Zur Unterscheidung von den Ritzel-Speichen 58 des radial inneren Speichenbereichs 54 sind die Ritzel-Speichen des radial äußeren Speichenbereichs 56 mit 62 und 64 bezeichnet.

Die Antriebsdrehrichtung der Ritzelanordnung 10 und damit des durchmessergrößten Ritzels 12 ist in den Figuren 2 und 3 mit M bezeichnet.

Jede zweite Ritzel-Speiche 62 des äußeren Speichenbereichs 56 ist dabei mit der ihr unmittelbar in Antriebsdrehrichtung M vorauseilenden Ritzel-Speiche 64 durch eine Verbindungsstrebe 66 verbunden. Durch diese Verbindungsstrebe 66 wird die Steifigkeit des durchmessergrößten Ritzels 12 überproportional zur damit verbundenen Gewichtszunahme erhöht. Die Ritzel-Speichen 62 sind somit Verbindungsspeichen im Sinne der obigen Beschreibungseinleitung. Um eine unnötige Gewichtszunahme zu vermeiden, sind die Ritzel-Speichen 64 mit den ihnen in Antriebsdrehrichtung M unmittelbar vorauseilenden Ritzel-Speichen 62 nicht mit Verbindungsstreben verbunden.

Die Verbindungsstreben 66 liegen vorzugsweise auf einem Kreis, dessen Mittelpunkt die Ritzeldrehachse R ist. Die Verbindungsstreben 66 liegen weiter radial möglichst weit außen am Ritzel 12, jedoch innerhalb des radialen Erstreckungsbereichs des axial unmittelbar benachbarten nächst kleineren Ritzels 14. Dadurch kann das nächst kleinere Ritzel 14 und mit diesem der Ritzeldom 36 mechanisch an den Verbindungsstreben 66 mit dem durchmessergrößten Ritzel 12 verbunden werden bzw. verbunden sein.

Die zuvor im Zusammenhang mit Figur 1 genannten Axialvorsprünge 48 stützen sich bevorzugt mit ihren vom Ritzel 14 wegweisenden Endflächen auf den ihnen zugewandten Seiten der Verbindungsstreben 66 ab. Im dargestellten Beispiel sind in besonders vorteilhafter Weise die Verbindungsstreben 66 von Stiften 68 durchsetzt, die bevorzugt einstückig mit den Axialvorsprüngen 48 an diesen ausgebildet sind. Mittels dieser Stifte 68 als Verbindungsmittel ist das durchmessergrößte Ritzel 12 mit dem nächst kleineren Ritzel 14 und damit mit dem gesamten Ritzeldom 36 Drehmoment und Axialkraft übertragend verbunden.

Wie in Figur 3 sehr gut zu erkennen ist, sind alle Ritzel-Speichen 58, 62 und 64 des durchmessergrößten Ritzels 12 derart an diesem Ritzel 12 ausgebildet, dass deren radial innere Längsenden bezüglich der radial äußeren Längsenden der jeweiligen selben Ritzel-Speiche in Antriebsdrehrichtung M vorauseilen. Hierdurch wird während einer Drehmomentübertragung von einer Fahrradkette zur Hinterradnabe eine überwiegende Druckbeanspruchung der einzelnen Ritzel-Speichen 58, 62 und 64 erreicht.

Nicht nur eilen die radial inneren Längsenden einer Ritzel-Speiche dem radial äußeren Längsende derselben Speiche voraus, sondern überdies sind die Ritzel-Speichen 58, 62 und 64 vorzugsweise nicht gerade, sondern gekrümmt ausgebildet. Die Krümmung der Ritzel-Speichen 58,62 und 64 erfolgt dabei um zur Ritzeldrehachse R parallele, der jeweils gekrümmten Ritzel-Speiche in Antriebsdrehrichtung M nachlaufende Krümmungsachsen. Die Ritzel-Speichen 58, 62 und 64 sind daher bei Betrachtung in Antriebsdrehrichtung M konkav gekrümmt und bei Betrachtung entgegen der Antriebsdrehrichtung M konvex gekrümmt. Durch diese Krümmung wird bei einer Drehmomentübertragung vom Zahnkranz 40 auf den Nabenbereich 42 und damit auf die Hinterradnabe eine besonders vorteilhafte Spannungsbelastung in den Ritzel-Speichen 58, 62 und 64 erreicht, die überwiegend durch Druckspannungen gebildet ist. Die Druckfestigkeit einer Ritzel-Speiche ist um ein Vielfaches höher als ihre Zugfestigkeit oder Schubfestigkeit.

Durch die genannte Krümmung wird überdies erreicht, dass der Winkel a, den eine in der Ritzelebene des Ritzels 12 liegende Tangente 70 an eine Ritzel-Speiche 58, 62 oder 64 mit einer ebenfalls in der Ritzelebene liegenden Tangente 72 an einen Bezugskreis 74 mit der Ritzeldrehachse R als Mittelpunkt einschließt, umso größer ist, je kleiner der Radius des Bezugskreises ist. Vorzugsweise sind alle Winkel zwischen Speichen-Tangenten und Bezugskreis-Tangenten für ein und denselben Bezugskreis an allen von diesem Bezugskreis geschnittenen Ritzel-Speichen gleich groß. Grundsätzlich könnte die vorliegend geschilderte Winkel-Bedingung auch durch polygonisierte Ritzel-Speichen eingehalten werden. Zur Vermeidung von Spannungsspitzen in Eck- oder Knickbereichen von als Polygon ausgestalteten Ritzel-Speichen ist jedoch die oben geschilderte gekrümmte Ausbildung der Ritzel-Speichen bevorzugt.

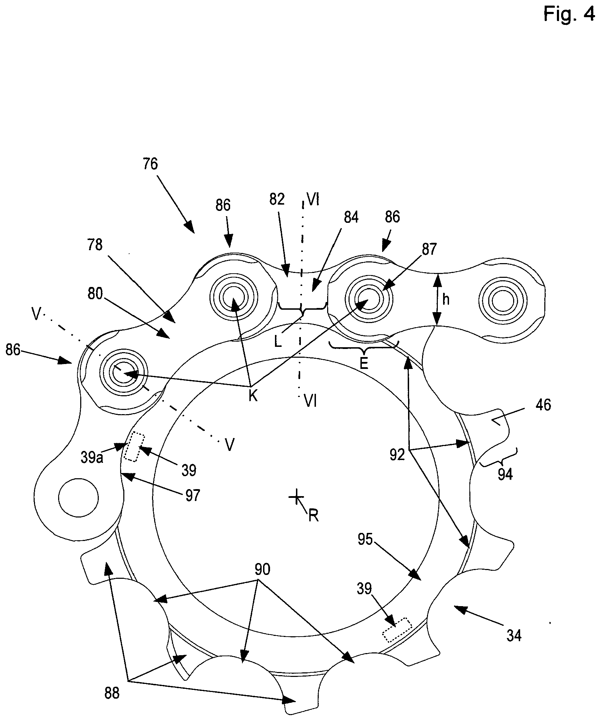

Figur 4 zeigt das durchmesserkleinste Ritzel 34 in Frontansicht bei axialer Blickrichtung. Die Ritzeldrehachse R ist folglich orthogonal zur Zeichenebene von Figur 4, das in der Figur 4 nicht dargestellte durchmessergrößte Ritzel 12 und alle weiteren Ritzel 14 bis 32 liegen hinter der Zeichenebene von Figur 4.

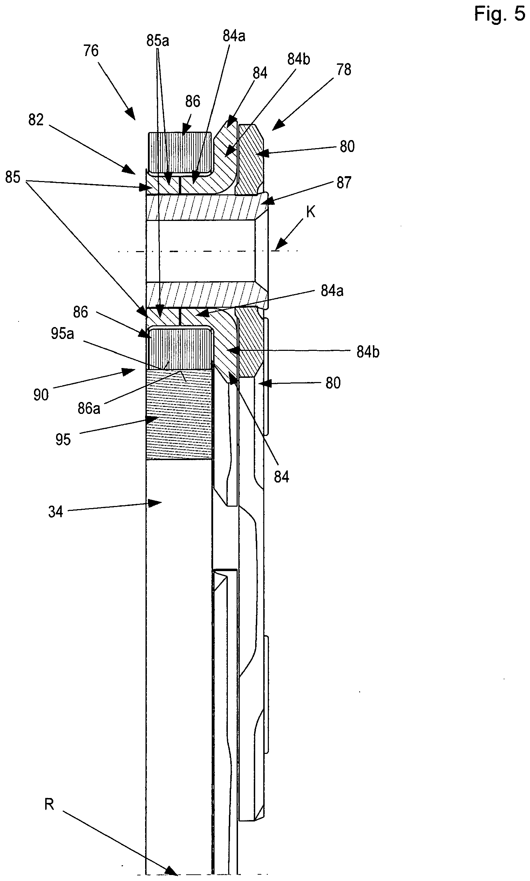

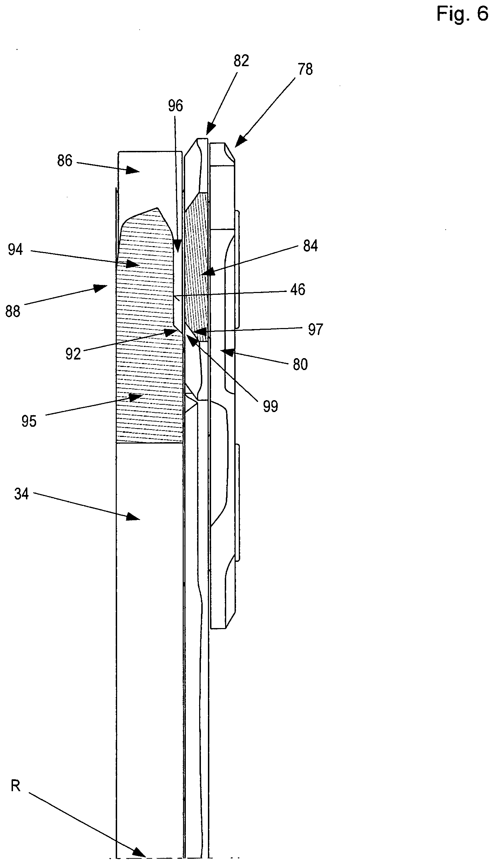

In Figur 4 ist ein Abschnitt einer Fahrradkette 76 dargestellt, der mit dem durchmesserkleinsten Ritzel 34 kämmt. Die Fahrradkette 76 weist in an sich bekannter Weise längs ihres Verlaufs abwechselnd Paare 78 von Außenlaschen und Paare 82 von Innenlaschen auf. In Figur 4 blickt man auf die äußere, also weiter von dem durchmessergrößten Ritzel 12 entfernt gelegene Außenlasche 80. Ebenso blickt man am Innenlaschenpaar 82 auf die äußere Innenlasche 84. Weiter sind in an sich bekannter Weise die in Kettenlängsrichtung alternierend aufeinanderfolgenden Außenlaschenpaare 78 und Innenlaschenpaare 82 jeweils miteinander um eine Kettengelenkachse K relativ zueinander drehbar miteinander verbunden. Die Kettengelenkachsen K einer jeden Verbindung zwischen aufeinanderfolgenden Außenlaschenpaaren 78 und Innenlaschenpaaren 82 sind während eines Kämmeingriffs mit dem Ritzel 34 idealerweise parallel zur Ritzeldrehachse R. Die Kettengelenkachsen K sind überdies Rotationsachsen von zwischen den jeweiligen Laschenpaaren 78 und 82 aufgenommenen Rollen 86. Die Rollen 86 sind allerdings in Figur 4 von den jeweiligen äußeren Laschen 80 bzw. 84 verdeckt und sind lediglich in den Figuren 5 und 6 zu erkennen.

In die Zwischenräume zwischen zwei in Kettenlängsrichtung aufeinanderfolgenden Rollen 86 greifen äquidistant am Umfang des Ritzels 34 verteilt angeordnete Ritzelzähne 88 ein, um zwischen der Fahrradkette 76 und dem hinteren Laufrad Drehmoment zu übertragen. Die Rollen 86 liegen dabei im Bereich der Zahnzwischenräume 90 zwischen jeweils in Umfangsrichtung unmittelbar aufeinanderfolgenden Zähnen 88 auf dem Ritzel 34 auf.

Von den Zähnen 88 taucht während eines Kämmeingriffs mit der Fahrradkette 76 lediglich ein Eintauchabschnitt 94 in den Zwischenraum zwischen zwei Laschen ein und desselben Laschenpaares ein und fährt aus diesem wieder aus. Wie noch ausführlich im Zusammenhang mit den folgenden Figuren 5 und 6 dargestellt werden wird, ist der Eintauchabschnitt 94 in axialer Richtung weniger breit ausgebildet als ein radial innerhalb der Eintauchabschnitte gelegener Stützabschnitt 95 des Ritzels 34. Am Übergang zwischen dem axial dickeren Stützabschnitt 95 und dem axial dünneren Eintauchabschnitt 94 befindet sich eine Axialstufe 92, welche überdies die Lage des jeweiligen Zahnfußes anzeigt. Die Axialstufe 92 kann als in axialer Richtung vom durchmessergrößten Ritzel 12 weg zur Ritzeldrehachse R hin geneigte Fase ausgebildet sein.

In Figur 4 ist am Innenlaschenpaar 82 ein Längsmittelabschnitt L des Innenlaschenpaars 82 und damit der äußeren Innenlasche 84 und der ihr in axialer Richtung gegenüberliegenden inneren Innenlasche angezeigt.

Die Laschen der Innenlaschenpaare 82 und die Außenlaschenpaare 78 weisen in ihrem Längsmittelabschnitt L eine geringere Laschenhöhe h auf als in ihren Längsendbereichen E. Somit kann ein Steg 39 zur Verbindung mit dem nächst größeren Ritzel 32 (angedeutet durch strichliniertes Rechteck 39 in Figur 4) am Umfangsort eines Zahns 88 radial so weit außen vorgesehen sein, dass sein radial äußerer Rand 39a weiter von der Ritzeldrehachse R entfernt ist als ein der Ritzeldrehachse R zugewandter Rand 97 einer Lasche im Bereich ihrer Längsendbereiche E.

In Figur 5 ist eine Schnittansicht der Eingriffssituation des Ritzels 34 mit der Kette 76 längs der die Ritzeldrehachse R enthaltenden Schnittebene V-V gezeigt. Der in Figur 5 gezeigte Schnitt geht außerdem durch die Kettengelenkachse K und damit durch eine Rolle 86 der Fahrradkette 76.

In Figur 5 ist zu erkennen, wie der Stützabschnitt 95 des Ritzels 34 im Bereich eines Zahnzwischenraums 90 die Fahrradkette 76 axial führt und somit ihre axiale Beweglichkeit längs der Ritzeldrehachse R einschränkt. Eine Rolle 86 liegt dabei vorzugsweise mit ihrer Mantelfläche 86a auf einer entsprechenden, in radiale Richtung weisenden Stützfläche 95a des Stützabschnitts 95 auf, wobei der Stützabschnitt 95 zumindest im Auflagebereich seiner Stützfläche 95a, welche zur Anlage einer Rollen-mantelfläche 86a ausgebildet ist, in seiner axialen Breite nicht mehr als 10 %, vorzugsweise nicht mehr als 5 %, besonders bevorzugt nicht mehr als 3 % von der axialen Breite der an ihm im Eingriffsfall anliegenden Rolle 86 abweicht. Bezugsgröße für die prozentuale Abweichung ist die axiale Breite der Rolle 86.

In der Ansicht von Figur 5 ist ein Teil einer inneren Innenlasche 85 zu erkennen, welche zusammen mit der äußeren Innenlasche 84 axial die Rolle 86 zwischen dem Innenlaschenpaar 82 hält. Das längs der Rollenachse der Rolle 86, die mit der Kettengelenkachse K zusammenfällt, gebildete Kettengelenk umfasst einen Kettenniet 87, welcher die am Kettengelenk aufeinandertreffenden Laschenpaare aus Außenlaschenpaar 78 und Innenlaschenpaar 82 in axialer Richtung miteinander verbindet, eine Relativdrehung um die Kettengelenkachse K als einzige Relativbewegung jedoch zulässt.

Die Innenlaschen 84 und 85 weisen in der Längsschnittansicht von Figur 5 jeweils einen axialen Schenkel 84a bzw. 85a auf, welcher von der Rolle 86 umgeben ist, und weisen einen radialen Schenkel 84b bzw. 85b (nicht dargestellt) auf, zwischen welchen die Rolle 86 axial eingefasst ist. Die radialen Schenkel 84b und 85b der Innenlaschen 84 und 85 liegen somit den Stirnseiten der Rolle 86 gegenüber. Es sind die radialen Schenkel 84b und 85b der Innenlaschen 84 bzw. 85, die auch im Zusammenwirken mit dem Stützabschnitt 95 eine axiale Festlegung der Fahrradkette 76 am Ritzel 34 bewirken. In ihrer dreidimensionalen Gestalt sind die radialen Schenkel Scheiben und die axialen Schenkel Hülsen.

In Figur 6 ist eine Längsschnittansicht längs der die Ritzeldrehachse R enthaltenden Schnittebene VI-VI gezeigt. Diese Schnittebene schneidet den Längsmittelabschnitt L eines Innenlaschenpaars 82 und schneidet den in diesen Längsmittelabschnitt L eingetauchten Zahn 88 des Ritzels 34.

Die in Figur 6 gezeigte Rolle 86 liegt an dem geschnittenen Zahn 88 von Figur 6 vorauseilenden Zahn an und überträgt Drehmoment auf diesen. Eine am geschnittenen Zahn 88 von Figur 6 zum Zwecke der Drehmomentübertragung anliegende Rolle liegt vor der Zeichenebene von Figur 6 und ist deshalb nicht dargestellt.

Wie in Figur 6 zu erkennen ist, ist die axiale Breite des Eintauchabschnitts 94 des Zahns 88 geringer bemessen als die lichte Weite des Längsmittelabschnitts L des Innenlaschenpaars 82, sodass die die Frontfläche 46 aufweisende Seite des Eintauchabschnitts 94 - das ist die vom durchmessergrößten Ritzel 12 wegweisende Seite - mit Abstand von der ihr gegenüberliegenden äußeren Innenlasche 84 des Innenlaschenpaars 82 entfernt gelegen ist. Zwischen dem Eintauchabschnitt 94 und der ihm axial gegenüberliegenden äußeren Innenlasche 84 ist somit ein Axialspalt 96 vorhanden. Dieser Axialspalt 96 sorgt für die axiale Beweglichkeit, die die Fahrradkette 76 benötigt, um auf das nächst größere Ritzel geschaltet zu werden. Im Zusammenspiel mit der oben beschriebenen axialen Führung der Fahrradkette 76 in den Zahnzwischenräumen 90 wird also eine für das Schalten ausreichende Beweglichkeit der Kette 76 erreicht, ohne dass es aufgrund von übermäßigem Schräglauf der Kette 76 zu einem unerwünschtem Schleifkontakt der Kette 76 mit dem nächst größeren Ritzel kommt.

Weiter ist in Figur 6 dargestellt, dass ein zur Ritzeldrehachse R hinweisender Rand 97 der äußeren Innenlasche 84 mit Abstand von der Stufe 92 angeordnet ist, sodass auch zwischen der Stufe 92 und dem der Ritzeldrehachse R näheren Rand 97 der äußeren Innenlasche 84 ein Spalt 99 vorliegt. Zumindest die äußere Innenlasche 84 des Innenlaschenpaars 82 hat somit keinen Kontakt mit dem zwischen das Innenlaschenpaar 82 eingreifenden Zahn 88. Der Zahn 88 dient somit vorteilhaft ausschließlich oder nahezu ausschließlich der Übertragung von Drehmoment zwischen der Fahrradkette 76 und dem Ritzel 34, wohingegen die Zahnzwischenräume 90 größtenteils oder sogar ausschließlich der axialen Führung der Fahrradkette 76 auf dem Ritzel 34 dienen können.

Durch diese konstruktive Ausgestaltung kann die Fahrradkette 76 axial straff auf dem Ritzel 34 geführt sein, sodass die Fahrradkette 76 selbst bei Vorhandensein nur eines einzigen tretkurbelseitigen Kettenblatts und der damit verbundenen Schrägstellung das dem Ritzel 34 axial unmittelbar benachbarte nächst größere Ritzel 32 nicht berührt. Dies ist umso beachtlicher, als bei der beispielhaft gezeigten 12-fach-Ritzelanordnung 10 der Frontflächenabstand zwischen den Ritzeln 32 und 34 sehr gering ist, beispielsweise nur etwa 3,6 mm betragen kann.

## Patentansprüche

1. Fahrrad-Hinterrad-Ritzelanordnung (10), welche um eine Ritzeldrehachse (R) drehbar ist, umfassend eine Mehrzahl von bezüglich der Ritzeldrehachse (R) koaxialen, mit axialem Abstand voneinander angeordneten Ritzeln (12, 14, 16, 18. 20, 22, 24, 26, 28, 30, 32, 34) unterschiedlicher Zähneanzahlen, welche zum formschlüssigen Eingriff mit einer Fahrradkette (76) ausgebildet sind, wobei die Ritzelanordnung (10) einen Gangbereich-Quotienten aufweist, welcher gebildet ist durch Division der Zähneanzahl des durchmessergrößten Ritzels (12) durch die Zähneanzahl des durchmesserkleinsten Ritzels (34), und einen Packungsdichte-Quotienten aufweist, welcher gebildet ist durch Division der Anzahl an Ritzeln (12, 14, 16, 18. 20, 22, 24, 26, 28, 30, 32, 34) in der Ritzelanordnung (10) durch den axialen Abstand (A), gemessen in Millimeter, der axial äußersten Ritzel voneinander, wobei die Ritzelanordnung (10) einen Gangbereich-Packungskoeffizienten, gebildet aus dem Produkt aus dem Gangbereich-Quotienten und dem Packungsdichte-Quotienten aufweist, welcher größer ist als 1,25, vorzugsweise größer ist als 1,3, besonders bevorzugt größer ist als 1,35, höchst bevorzugt größer ist als 1,4,
**dadurch gekennzeichnet, dass** zwei axial benachbarte Ritzel (12, 14, 16, 18, 20, 22, 24, 26, 28, 30, 32, 34), insbesondere ein kleineres Ritzel (14, 16, 18, 20, 22, 24, 26, 28, 30, 32, 34) als das durchmessergrößte Ritzel (12) und das diesem axial unmittelbar benachbarte Ritzel (16, 18, 20, 22, 24, 26, 28, 30, 32, 34), einstückig miteinander ausgebildet und durch eine Mehrzahl von den zwischen den benachbarten Ritzeln bestehenden Axialspalt (37, 50) überbrückenden Verbindungsmitteln (39) in Form von Stegen (39) Drehmoment übertragend und bevorzugt auch Axialkraft übertragend gekoppelt sind.

2. Fahrrad-Hinterrad-Ritzelanordnung (10) nach Anspruch 1,
**dadurch gekennzeichnet, dass** ihr Gangbereich-Quotient einen Wert größer gleich 4,2, bevorzugt größer gleich 4,5 aufweist, wobei der Gangbereich-Quotient nicht größer als 6, insbesondere nicht größer als 5,5 ist.

3. Fahrrad-Hinterrad-Ritzelanordnung (10) nach Anspruch 1 oder 2,
**dadurch gekennzeichnet, dass** ihr Packungsdichte-Quotient einen Wert größer gleich 0,286, bevorzugt größer gleich 0,290 aufweist, wobei der Packungsdichte-Quotient nicht größer als 0,36, insbesondere nicht größer als 0,33 ist.

4. Fahrrad-Hinterrad-Ritzelanordnung (10) nach einem der vorhergehenden Ansprüche,
**dadurch gekennzeichnet, dass** das durchmessergrößte Ritzel (12) nicht weniger als 45 Zähne, vorzugsweise nicht weniger als 48 Zähne, höchst bevorzugt nicht weniger als 50 Zähne aufweist.

5. Fahrrad-Hinterrad-Ritzelanordnung (10) nach einem der vorhergehenden Ansprüche,
**dadurch gekennzeichnet, dass** das durchmesserkleinste Ritzel (34) nicht mehr als 12 Zähne (88), vorzugsweise nicht mehr als 11 Zähne, höchstbevorzugt nicht mehr als 10 Zähne (88) aufweist.

6. Fahrrad-Hinterrad-Ritzelanordnung (10) nach einem der vorhergehenden Ansprüche,
**dadurch gekennzeichnet, dass** sie mehr als 8, vorzugsweise mehr als 10, besonders bevorzugt mehr als 11 Ritzel (12, 14, 16, 18, 20, 22, 24, 26, 28, 30, 32, 34) aufweist.

7. Fahrrad-Hinterrad-Ritzelanordnung (10) nach einem der vorhergehenden Ansprüche,
**dadurch gekennzeichnet, dass** das durchmessergrößte Ritzel (12) radial außen einen Zahnkranzbereich (40) zur Übertragung von Kraft von einer Fahrradkette (76) auf das Ritzel (12) und radial innen einen Nabenbereich (42) zur Übertragung von Drehmoment vom Ritzel (12) auf eine Hinterradnabe aufweist, wobei radial zwischen dem Zahnkranzbereich (40) und dem Nabenbereich (42) zur Drehmoment übertagenden Verbindung dieser Bereiche (40, 42) eine Mehrzahl von Ritzel-Speichen (58, 62, 64) vorgesehen ist.

8. Fahrrad-Hinterrad-Ritzelanordnung (10) nach einem der vorhergehenden Ansprüche,
**dadurch gekennzeichnet, dass** das durchmessergrößte Ritzel (12) derart gekröpft ist, dass sein Zahnkranz (40) von dem durchmesserkleinsten Ritzel (34) einen größeren axialen Abstand (A) aufweist als ein radial weiter innen gelegener abgekröpfter Ritzelbereich des durchmessergrößten Ritzels (12).

9. Fahrrad-Hinterrad-Ritzelanordnung (10) nach einem der vorhergehenden Ansprüche,
**dadurch gekennzeichnet, dass** zwei axial benachbarte Ritzel (12, 14, 16, 18, 20, 22, 24, 26, 28, 30, 32, 34), insbesondere das durchmessergrößte Ritzel (12) und das diesem axial unmittelbar benachbarte Ritzel (14), gesondert voneinander ausgebildet und durch eine Mehrzahl von den zwischen den benachbarten Ritzeln (12, 14, 16, 18, 20, 22, 24, 26, 28, 30, 32, 34) bestehenden Axialspalt (37, 50) überbrückende Verbindungsmittel (39, 45, 68) Drehmoment übertragend und bevorzugt auch Axialkraft übertragend gekoppelt sind.

10. Fahrrad-Hinterrad-Ritzelanordnung (10) nach einem der vorhergehenden Ansprüche,
**dadurch gekennzeichnet, dass** die Verbindungsmittel (39, 45, 68) mit dem kleineren der zwei axial benachbarten Ritzel (14, 16, 18, 20, 22, 24, 26, 28, 30, 32, 34) jeweils in Umfangsrichtung an einem Ort verbunden sind, an dem sich an dem kleineren der zwei axial benachbarten Ritzel (14, 16, 18, 20, 22, 24, 26, 28, 30, 32, 34) ein Zahn (88) befindet.

11. Fahrrad-Hinterrad-Antriebsanordnung mit einer Fahrrad-Hinterrad-Ritzelanordnung (10) gemäß Anspruch 10 und mit einer Fahrradkette (76), wobei die Fahrradkette (76) eine an sich bekannte Rollenkette mit einer Mehrzahl von in Kettenlängsrichtung äquidistant mit parallelen Rollendrehachsen (K) angeordneten Rollen (86) ist, welche Rollen (86) abwechselnd über Paare (78, 82) paralleler Innenlaschen (84, 85) und Außenlaschen (80) miteinander verbunden sind, wobei jede Innenlasche (84, 85) im Bereich einer mit ihr verbundenen Rolle (86) in Richtung der Rollendrehachse (K) zwischen der Rolle (86) und einer Außenlasche (80) angeordnet ist, wobei sowohl die Außenlaschen (80) wie auch die Innenlaschen (84, 85) in einem Längsmittelabschnitt (L) eine geringere Höhe (h) aufweisen als an ihren Längsendabschnitten (E),
**dadurch gekennzeichnet, dass** die Verbindungsmittel (39, 45, 68) radial derart weit außen mit dem kleineren (14, 16, 18, 20, 22, 24, 26, 28, 30, 32, 34) der zwei der zwei axial benachbarten Ritzel (12, 14, 16, 18, 20, 22, 24, 26, 28, 30, 32, 34) verbunden sind, dass während eines kämmenden Eingriffs der Fahrradkette (76) mit dem kleineren (14, 16, 18, 20, 22, 24, 26, 28, 30, 32, 34) der zwei axial benachbarten Ritzel (12, 14, 16, 18, 20, 22, 24, 26, 28, 30, 32, 34) ein radial innerer Rand (97) der Längsendbereiche (E) der Innen- oder/und der Außenlaschen näher bei der Ritzeldrehachse (R) gelegen ist als ein radial äußerer Rand (39a) der Verbindungsmittel (39, 45, 68).

12. Fahrrad-Hinterrad-Antriebsanordnung mit einer Fahrrad-Hinterrad-Ritzelanordnung (10) gemäß einem der vorhergehenden Ansprüche und mit einer Fahrradkette (76),
**dadurch gekennzeichnet, dass** der Zahnkranz (40) wenigstens des durchmesserkleinsten Ritzels (34) der Fahrrad-Hinterrad-Ritzelanordnung (10) mit einer sich längs eines Umlaufs in Umfangsrichtung zwischen Zähnen (88) und diesen unmittelbar benachbarten Zahnzwischenräumen (90) verändernden, insbesondere periodisch verändernden axialen Ritzeldicke ausgebildet ist, wobei die axiale Dicke des Ritzels (34) im Bereich der Zahnzwischenräume (90) größer ist als im Bereich der Zähne (88).

13. Fahrrad-Hinterrad-Antriebsanordnung nach Anspruch 12, wobei die Fahrradkette (76) eine an sich bekannte Rollenkette mit einer Mehrzahl von in Kettenlängsrichtung äquidistant mit parallelen Rollendrehachsen (K) angeordneten Rollen (86) ist, welche Rollen (86) abwechselnd über Paare (78, 82) paralleler Innenlaschen (84, 85) und Außenlaschen (80) miteinander verbunden sind, wobei jede Innenlasche (84, 85) im Bereich einer mit ihr verbundenen Rolle (86) in Richtung der Rollendrehachse (K) zwischen der Rolle (86) und einer Außenlasche (80) angeordnet ist,
**dadurch gekennzeichnet, dass** wenigstens für das durchmesserkleinste Ritzel (34) gilt, dass die axiale Breite einer zum Anlageeingriff mit einer Rolle (86) der Fahrradkette (76) im Bereich eines Zahnzwischenraums (90) ausgebildeten Rollen-Auflagefläche (95a) des Ritzels (34) um nicht mehr als 10 %, vorzugsweise um nicht mehr als 5 %, besonders bevorzugt um nicht mehr als 3 % von der axialen Abmessung einer zur Anlage an der Rollen-Auflagefläche (95a) ausgebildeten Rollen-Mantelfläche (86a) - bezogen auf die axiale Abmessung der Rollen-Mantelfläche (86a) - abweicht.

14. Fahrrad-Antriebsanordnung mit einer Fahrrad-Hinterrad-Ritzelanordnung (10) oder einer Fahrrad-Hinterrad-Antriebsanordnung gemäß einem der vorhergehenden Ansprüche und mit genau einem vorderen, tretkurbelnäheren Kettenblatt, wobei das Kettenblatt eine technisch wirksame Zähneanzahl von zwischen 30 und 40, vorzugsweise von zwischen 34 und 36, die genannten Grenzen jeweils eingeschlossen.

## Claims

1. Bicycle rear-wheel pinion assembly (10) which can be rotated about a pinion axis of rotation (R), comprising a plurality of pinions (12, 14, 16, 18, 20, 22, 24, 26, 28, 30, 32, 34) which are coaxial with respect to the pinion axis of rotation (R), are arranged with axial spacing from one another, have different numbers of teeth and are formed for the purposes of form-fitting engagement with a bicycle chain (76), wherein the pinion assembly (10) has a gear range quotient, formed by division of the number of teeth of the pinion (12) of largest diameter by the number of teeth of the pinion (34) of smallest diameter, and a packing density quotient, formed by division of the number of pinions (12, 14, 16, 18, 20, 22, 24, 26, 28, 30, 32, 34) in the pinion assembly (10) by the axial spacing (A), measured in millimetres, of the axially outermost pinions from one another, wherein the pinion assembly (10) has a gear range packing coefficient, formed from the product of the gear range quotient and the packing density quotient, which is greater than 1.25, preferably is greater than 1.3, particularly preferably is greater than 1.35, most preferably is greater than 1.4,
**characterized in that** two axially adjacent pinions (12, 14, 16, 18, 20, 22, 24, 26, 28, 30, 32, 34), in particular a smaller pinion (14, 16, 18, 20, 22, 24, 26, 28, 30, 32, 34) than the pinion (12) of largest diameter and the pinion (16, 18, 20, 22, 24, 26, 28, 30, 32, 34) axially directly adjacent thereto, are formed in one piece with one another and are coupled in a torque-transmitting and preferably also axial-force-transmitting manner by a plurality of connecting means (39), in the form of webs (39), bridging the axial gap (37, 50) present between the adjacent pinions.

2. Bicycle rear-wheel pinion assembly (10) according to Claim 1,
**characterized in that** the gear range quotient thereof has a value greater than or equal to 4.2, preferably greater than or equal to 4.5, wherein the gear range quotient is not greater than 6, in particular is not greater than 5.5.

3. Bicycle rear-wheel pinion assembly (10) according to Claim 1 or 2,
**characterized in that** the packing density quotient thereof has a value greater than or equal to 0.286, preferably greater than or equal to 0.290, wherein the packing density quotient is not greater than 0.36, in particular is not greater than 0.33.

4. Bicycle rear-wheel pinion assembly (10) according to one of the preceding claims,
**characterized in that** the pinion (12) of largest diameter does not have fewer than 45 teeth, preferably does not have fewer than 48 teeth, most preferably does not have fewer than 50 teeth.

5. Bicycle rear-wheel pinion assembly (10) according to one of the preceding claims,
**characterized in that** the pinion (34) of smallest diameter does not have more than 12 teeth (88), preferably does not have more than 11 teeth, most preferably does not have more than 10 teeth (88).

6. Bicycle rear-wheel pinion assembly (10) according to one of the preceding claims,
**characterized in that** it has more than 8, preferably more than 10, particularly preferably more than 11 pinions (12, 14, 16, 18, 20, 22, 24, 26, 28, 30, 32, 34) .

7. Bicycle rear-wheel pinion assembly (10) according to one of the preceding claims,
**characterized in that** the pinion (12) of largest diameter radially outwardly has a toothed-ring region (40) for the transmission of force from a bicycle chain (76) to the pinion (12) and radially inwardly has a hub region (42) for the transmission of torque from the pinion (12) to a rear-wheel hub, wherein a plurality of pinion spokes (58, 62, 64) is provided radially between the toothed-ring region (40) and the hub region (42) for the purposes of connecting said regions (40, 42) in a torque-transmitting manner.

8. Bicycle rear-wheel pinion assembly (10) according to one of the preceding claims,
**characterized in that** the pinion (12) of largest diameter is cranked such that the toothed ring (40) thereof has a greater axial spacing (A) from the pinion (34) of smallest diameter than a cranked pinion region, located radially further inwardly, of the pinion (12) of largest diameter.

9. Bicycle rear-wheel pinion assembly (10) according to one of the preceding claims,
**characterized in that** two axially adjacent pinions (12, 14, 16, 18, 20, 22, 24, 26, 28, 30, 32, 34), in particular the pinion (12) of largest diameter and the pinion (14) axially directly adjacent thereto, are formed as separate from one another and are coupled in a torque-transmitting and preferably also axial-force-transmitting manner by a plurality of connecting means (39, 45, 68) bridging the axial gap (37, 50) present between the adjacent pinions (12, 14, 16, 18, 20, 22, 24, 26, 28, 30, 32, 34).

10. Bicycle rear-wheel pinion assembly (10) according to one of the preceding claims,
**characterized in that** the connecting means (39, 45, 68) are connected to the smaller of the two axially adjacent pinions (14, 16, 18, 20, 22, 24, 26, 28, 30, 32, 34) in each case in the circumferential direction at a location at which a tooth (88) is located on the smaller of the two axially adjacent pinions (14, 16, 18, 20, 22, 24, 26, 28, 30, 32, 34).

11. Bicycle rear-wheel drive assembly with a bicycle rear-wheel pinion assembly (10) according to Claim 10 and with a bicycle chain (76), wherein the bicycle chain (76) is a roller-type chain known per se with a plurality of rollers (86) arranged equidistantly in the chain longitudinal direction with parallel roller axes of rotation (K), which rollers (86) are connected to one another in an alternating manner via pairs (78, 82) of parallel inner link plates (84, 85) and outer link plates (80), wherein each inner link plate (84, 85) is, in the region of a roller (86) connected to said inner link plate, arranged between the roller (86) and an outer link plate (80) in the direction of the roller axis of rotation (K), wherein both the outer link plates (80) and the inner link plates (84, 85) have a lower height (h) in a longitudinal centre portion (L) than at the longitudinal end portions (E) thereof,
**characterized in that** the connecting means (39, 45, 68) are connected to the smaller (14, 16, 18, 20, 22, 24, 26, 28, 30, 32, 34) of the two of the two axially adjacent pinions (12, 14, 16, 18, 20, 22, 24, 26, 28, 30, 32, 34) to a radially outwardly far enough extent that, during a meshing engagement of the bicycle chain (76) with the smaller (14, 16, 18, 20, 22, 24, 26, 28, 30, 32, 34) of the two axially adjacent pinions (12, 14, 16, 18, 20, 22, 24, 26, 28, 30, 32, 34), a radially inner edge (97) of the longitudinal end regions (E) of the inner or/and the outer link plates is located closer to the pinion axis of rotation (R) than a radially outer edge (39a) of the connecting means (39, 45, 68).

12. Bicycle rear-wheel drive assembly with a bicycle rear-wheel pinion assembly (10) according to one of the preceding claims and with a bicycle chain (76), **characterized in that** the toothed ring (40) at least of the pinion (34) of smallest diameter of the bicycle rear-wheel pinion assembly (10) is formed with an axial pinion thickness that changes, in particular periodically changes, along a revolution in the circumferential direction between teeth (88) and tooth intermediate spaces (90) directly adjacent thereto, wherein the axial thickness of the pinion (34) is greater in the region of the tooth intermediate spaces (90) than in the region of the teeth (88).

13. Bicycle rear-wheel drive assembly according to Claim 12, wherein the bicycle chain (76) is a roller-type chain known per se with a plurality of rollers (86) arranged equidistantly in the chain longitudinal direction with parallel roller axes of rotation (K), which rollers (86) are connected to one another in an alternating manner via pairs (78, 82) of parallel inner link plates (84, 85) and outer link plates (80), wherein each inner link plate (84, 85) is, in the region of a roller (86) connected to said inner link plate, arranged between the roller (86) and an outer link plate (80) in the direction of the roller axis of rotation (K),
**characterized in that** it holds true, at least for the pinion (34) of smallest diameter, that the axial width of a roller support surface (95a), formed for the purposes of contact engagement with a roller (86) of the bicycle chain (76) in the region of a tooth intermediate space (90), of the pinion (34) deviates by not more than 10%, preferably by not more than 5%, particularly preferably by not more than 3%, from the axial dimension of a roller lateral surface (86a), formed for the purposes of making contact with the roller support surface (95a), with respect to the axial dimension of the roller lateral surface (86a).

14. Bicycle drive assembly with a bicycle rear-wheel pinion assembly (10) or a bicycle rear-wheel drive assembly according to one of the preceding claims and with exactly one front chain wheel, relatively close to the pedal crank, wherein the chain wheel a technically active number of teeth of between 30 and 40, preferably of between 34 and 36, each of the limits stated being included.

## Revendications

1. Agencement de pignons de roue arrière de bicyclette (10) qui peut tourner autour d'un axe de rotation de pignons (R), comprenant une pluralité de pignons (12, 14, 16, 18, 20, 22, 24, 26, 28, 30, 32, 34) disposés à distance axiale les uns des autres, coaxiaux par rapport à l'axe de rotation de pignons (R) et ayant un nombre différent de dents qui sont prévues pour s'engager par correspondance de formes avec une chaîne de bicyclette (76), l'agencement de pignons (10) présentant un quotient de plage de rapport qui est formé par la division du nombre de dents du pignon de plus grand diamètre (12) par le nombre de dents du pignon de plus petit diamètre (34) et présentant un quotient de densité de compactage qui est formé par la division du nombre de pignons (12, 14, 16, 18, 20, 22, 24, 26, 28, 30, 32, 34) dans l'agencement de pignons (10) par la distance axiale (A) mesurée en millimètres entre les pignons axialement les plus extérieurs, l'agencement de pignons (10) présentant un coefficient de plage de rapport-compactage qui est formé par le produit du quotient de plage de rapport et du quotient de densité de compactage, qui est supérieur à 1,25, de préférence supérieur à 1,3, particulièrement préférablement supérieur à 1,35, et le plus préférablement supérieur à 1,4, **caractérisé en ce que** deux pignons axialement adjacents (12, 14, 16, 18, 20, 22, 24, 26, 28, 30, 32, 34), en particulier un pignon plus petit (14 16, 18, 20, 22, 24, 26, 28, 30, 32, 34) que le pignon de plus grand diamètre (12) et le pignon (16, 18, 20, 22, 24, 26, 28, 30, 32, 34) immédiatement adjacent axialement à celui-ci, sont réalisés d'une seule pièce l'un avec l'autre et sont accouplés, avec transmission du couple et de préférence aussi avec transmission de la force axiale, par une pluralité de moyens de liaison (39) sous la forme de nervures (39), surmontant la fente axiale (37, 50) existant entre les pignons adjacents.

2. Agencement de pignons de roue arrière de bicyclette (10) selon la revendication 1,
**caractérisé en ce que** son quotient de plage de rapport présente une valeur supérieure ou égale à 4,2, de préférence supérieure ou égale à 4,5, le quotient de plage de rapport n'étant pas supérieur à 6, en particulier n'étant pas supérieur à 5,5.

3. Agencement de pignons de roue arrière de bicyclette (10) selon la revendication 1 ou 2, **caractérisé en ce que** son quotient de densité de compactage présente une valeur supérieure ou égale à 0,286, de préférence supérieure ou égale à 0,290, le quotient de densité de compactage n'étant pas supérieur à 0,36, en particulier n'étant pas supérieur à 0,33.

4. Agencement de pignons de roue arrière de bicyclette (10) selon l'une quelconque des revendications précédentes,
**caractérisé en ce que** le pignon de plus grand diamètre (12) ne présente pas moins de 45 dents, de préférence pas moins de 48 dents, le plus préférablement pas moins de 50 dents.

5. Agencement de pignons de roue arrière de bicyclette (10) selon l'une quelconque des revendications précédentes,
**caractérisé en ce que** le pignon de plus petit diamètre (34) ne présente pas plus de 12 dents (88), de préférence pas plus de 11 dents, le plus préférablement pas plus de 10 dents (88).

6. Agencement de pignons de roue arrière de bicyclette (10) selon l'une quelconque des revendications précédentes,
**caractérisé en ce qu'**il présente plus de 8, de préférence plus de 10, particulièrement préférablement plus de 11 pignons (12, 14, 16, 18, 20, 22, 24, 26, 28, 30, 32, 34).

7. Agencement de pignons de roue arrière de bicyclette (10) selon l'une quelconque des revendications précédentes,
**caractérisé en ce que** le pignon de plus grand diamètre (12) présente radialement à l'extérieur une région de couronne dentée (40) pour le transfert de force d'une chaîne de bicyclette (76) au pignon (12) et radialement à l'intérieur une région de moyeu (42) pour le transfert de couple du pignon (12) à un moyeu de roue arrière, une pluralité de rayons de pignons (58, 62, 64) étant prévus radialement entre la région de couronne dentée (40) et la région de moyeu (42) pour la connexion par transfert de couple de ces régions (40, 42).

8. Agencement de pignons de roue arrière de bicyclette (10) selon l'une quelconque des revendications précédentes,
**caractérisé en ce que** le pignon de plus grand diamètre (12) est coudé de telle sorte que sa couronne dentée (40) présente une plus grande distance axiale (A) au pignon de plus petit diamètre (34) qu'une région de pignon coudée, placée radialement plus à l'intérieur, du pignon de plus grand diamètre (12).

9. Agencement de pignons de roue arrière de bicyclette (10) selon l'une quelconque des revendications précédentes,
**caractérisé en ce que** deux pignons axialement adjacents (12, 14, 16, 18, 20, 22, 24, 26, 28, 30, 32, 34), en particulier le pignon de plus grand diamètre (12) et le pignon (14) immédiatement axialement adjacent à celui-ci, sont réalisés séparément l'un de l'autre et sont accouplés, avec transmission de couple et de préférence aussi avec transmission de la force axiale, par une pluralité de moyens de liaison (39, 45, 68) surmontant la fente axiale (37, 50) existant entre les pignons adjacents (12, 14, 16, 18, 20, 22, 24, 26, 28, 30, 32, 34).

10. Agencement de pignons de roue arrière de bicyclette (10) selon l'une quelconque des revendications précédentes,
**caractérisé en ce que** les moyens de liaison (39, 45, 68) sont connectés au plus petit des deux pignons axialement adjacents (14, 16, 18, 20, 22, 24, 26, 28, 30, 32, 34) à chaque fois dans la direction périphérique à un endroit au niveau duquel se trouve une dent (88) sur le plus petit des deux pignons axialement adjacents (14, 16, 18, 20, 22, 24, 26, 28, 30, 32, 34).

11. Agencement d'entraînement de roue arrière de bicyclette comprenant un agencement de pignons de roue arrière de bicyclette (10) selon la revendication 10 et une chaîne de bicyclette (76), la chaîne de bicyclette (76) étant une chaîne à rouleaux connue en soi avec une pluralité de rouleaux (86) disposés dans la direction longitudinale de la chaîne de manière équidistante avec des axes de rotation de rouleaux parallèles (K), lesquels rouleaux (86) sont connectés les uns aux autres en alternance par le biais de paires (78, 82) de flasques intérieures parallèles (84, 85) et de flasques extérieures (80), chaque flasque intérieure (84, 85) étant disposée dans la région d'un rouleau (86) connecté à celle-ci dans la direction de l'axe de rotation de rouleaux (K) entre le rouleau (86) et une flasque extérieure (80), les flasques extérieures (80) ainsi que les flasques intérieures (84, 85) présentant dans une portion centrale longitudinale (L) une hauteur (h) plus faible qu'au niveau de leur portion d'extrémité longitudinale (E),
**caractérisé en ce que** les moyens de liaison (39, 45, 68) sont connectés radialement largement à l'extérieur au plus petit (14, 16, 18, 20, 22, 24, 26, 28, 30, 32, 34) des deux des deux pignons axialement adjacents (12, 14, 16, 18, 20, 22, 24, 26, 28, 30, 32, 34) de telle sorte que pendant un engagement d'engrènement de la chaîne de bicyclette (76) avec le plus petit (14, 16, 18, 20, 22, 24, 26, 28, 30, 32, 34) des deux pignons axialement adjacents (12, 14, 16, 18, 20, 22, 24, 26, 28, 30, 32, 34), un bord radialement intérieur (97) des régions d'extrémité longitudinales (E) des flasques intérieures et/ou extérieures soit placé plus près de l'axe de rotation de pignons (R) qu'un bord radialement extérieur (39a) des moyens de liaison (39, 45, 68).

12. Agencement d'entraînement de roue arrière de bicyclette comprenant un agencement de pignons de roue arrière de bicyclette (10) selon l'une quelconque des revendications précédentes et une chaîne de bicyclette (76),
**caractérisé en ce que** la couronne, dentée (40) au moins du pignon de plus petit diamètre (34) de l'agencement de pignons de roue arrière de bicyclette (10) est réalisée avec une épaisseur de pignon axiale variant, en particulier variant périodiquement, le long d'une périphérie dans la direction périphérique entre des dents (88) et des espaces intermédiaires entre les dents (90) directement adjacents à celles-ci, l'épaisseur axiale du pignon (34) dans la région des espaces intermédiaires entre les dents (90) étant plus grande que dans la région des dents (88).

13. Agencement d'entraînement de roue arrière de bicyclette selon la revendication 12, la chaîne de bicyclette (76) étant une chaîne à rouleaux connue en soi avec une pluralité de rouleaux (86) disposés dans la direction longitudinale de la chaîne de manière équidistante avec des axes de rotation de rouleaux parallèles (K), lesquels rouleaux (86) sont connectés les uns aux autres en alternance par le biais de paires (78, 82) de flasques intérieures parallèles (84, 85) et de flasques extérieures (80), chaque flasque intérieure (84, 85) étant disposée dans la région d'un rouleau (86) connecté à celle-ci dans la direction de l'axe de rotation de rouleaux (K) entre le rouleau (86) et une flasque extérieure (80),
**caractérisé en ce qu'**au moins pour le pignon de plus petit diamètre (34), la largeur axiale d'une surface d'appui de rouleau (95a) du pignon (34), réalisée pour l'engagement d'appui avec un rouleau (86) de la chaîne de bicyclette (76) dans la région d'un espace intermédiaire entre les dents (90), ne s'écarte pas de plus de 10 %, de préférence ne s'écarte pas de plus de 5 %, particulièrement préférablement ne s'écarte pas de plus de 3 % de la dimension axiale d'une surface d'enveloppe de rouleau (86a) réalisée pour l'application contre la surface d'appui de rouleau (95a), par rapport à la dimension axiale de la surface d'enveloppe de rouleau (86a).

14. Agencement d'entraînement de bicyclette comprenant un agencement de pignons de roue arrière de bicyclette (10) ou un agencement d'entraînement de roue arrière de bicyclette selon l'une quelconque des revendications précédentes et comprenant exactement un plateau avant plus proche de la manivelle de pédalier, dans lequel le plateau un nombre de dents techniquement actives compris entre 30 et 40, de préférence entre 34 et 36, lesdites limites étant à chaque fois incluses.
